(19) Europäisches Patentamt
European Patent Office
Office européen des brevets

(11) **EP 3 575 079 A1**

(12) **EUROPÄISCHE PATENTANMELDUNG**

(43) Veröffentlichungstag:
04.12.2019 Patentblatt 2019/49

(51) Int Cl.:
***B32B 17/10*** *(2006.01)*

(21) Anmeldenummer: **19183980.2**

(22) Anmeldetag: **27.09.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2012 EP 12188534**

(62) Dokumentnummer(n) der früheren Anmeldung(en) nach Art. 76 EPÜ:
**13770683.4 / 2 906 417**

(71) Anmelder: **Saint-Gobain Glass France**
**92400 Courbevoie (FR)**

(72) Erfinder:
• **ROUSSELET, Noemie**
**75005 Paris (FR)**

• **DROSTE, Stefan**
**52134 Herzogenrath (DE)**
• **BEHMKE, Michael**
**40227 Düsseldorf (DE)**
• **STELLING, Bernd**
**52134 Herzogenrath (DE)**

(74) Vertreter: **Gebauer, Dieter Edmund**
**Splanemann**
**Patentanwälte Partnerschaft**
**Rumfordstraße 7**
**80469 München (DE)**

Bemerkungen:
Diese Anmeldung ist am 02-07-2019 als Teilanmeldung zu der unter INID-Code 62 erwähnten Anmeldung eingereicht worden.

(54) **SCHEIBE MIT HOCHFREQUENZ-TRANSMISSION**

(57) Die vorliegende Erfindung betrifft eine Scheibe (10), mindestens umfassend:
- mindestens eine erste Scheibe (1.1) mit einer Außenseite (III) und einer Innenseite (IV),
- mindestens eine transparente, elektrisch leitfähige Beschichtung (3), die auf der Außenseite (III) und/oder der Innenseite (IV) der ersten Scheibe (1.1) angeordnet ist und

- mindestens einen Bereich (9) mit mindestens einer äußeren entschichteten Struktur (4.1) und einer inneren entschichteten Struktur (4.2), wobei zwischen der äußeren entschichteten Struktur (4.1) und der inneren entschichteten Struktur (4.2) und innerhalb der inneren entschichteten Struktur (4.2) die transparente, elektrisch leitfähige Beschichtung (3) vorliegt.

Figur 1

**Beschreibung**

Die Erfindung betrifft eine Scheibe, insbesondere eine Fahrzeugscheibe, mit transparenter, elektrisch leitfähiger Beschichtung und niedriger Transmissionsdämpfung für elektromagnetische Strahlung im Hochfrequenzbereich. Des Weiteren betrifft die Erfindung ein Verfahren zur Herstellung einer solchen Scheibe und deren Verwendung.

Aktuelle Kraftfahrzeuge benötigen eine Vielzahl von technischen Einrichtungen zum Senden und Empfangen von elektromagnetischer Strahlung zum Betrieb von Grunddiensten wie Rundfunkempfang, vorzugsweise in den Bändern AM, FM oder DAB, Mobiltelefonie in den Bändern GSM 900 und DCS 1800, UMTS und LTE sowie satellitengestützer Navigation (GPS) und WLAN.

Gleichzeitig weisen moderne Fahrzeugverglasungen zunehmend allseitige und vollflächige elektrisch leitfähige und für sichtbares Licht transparente Beschichtungen auf. Diese transparenten, elektrisch leitfähigen Beschichtungen schützen beispielsweise Innenräume vor Überhitzung durch Sonnenlicht oder Auskühlung, indem sie einfallende Wärmestrahlung reflektieren, wie aus EP 378917 A bekannt ist. Transparente, elektrisch leitfähige Beschichtungen können durch Anlegen einer elektrischen Spannung eine gezielte Erwärmung der Scheibe bewirken, wie aus WO 2010/043598 A1 bekannt ist.

Den transparenten, elektrisch leitfähigen Beschichtungen ist gemeinsam, dass sie auch undurchlässig für elektromagnetische Strahlung im Hochfrequenzbereich sind. Durch eine allseitige und vollflächige Verglasung eines Fahrzeugs mit transparenten, elektrisch leitfähigen Beschichtungen ist das Senden und Empfangen von elektromagnetischer Strahlung im Innenraum nicht mehr möglich. Für den Betrieb von Sensoren wie Regensensoren, Kamerasystemen oder ortsfesten Antennen werden üblicherweise ein oder zwei örtlich begrenzte Bereiche der elektrisch leitfähigen, transparenten Beschichtung entschichtet. Diese entschichteten Bereiche bilden ein sogenanntes Kommunikationsfenster oder Datenübertragungsfenster und sind beispielsweise aus EP 1 605 729 A2 bekannt.

Da die transparenten, elektrisch leitfähigen Beschichtungen die Farbgebung und Reflexionswirkung einer Scheibe beeinflussen, sind Kommunikationsfenster optisch sehr auffällig. Durch entschichtete Bereiche können sich Störungen im Sichtfeld des Fahrers ergeben, die die Fahrsicherheit beeinträchtigen und die unbedingt zu vermeiden sind. Deshalb werden Kommunikationsfenster an unauffälligen Positionen der Scheibe angeordnet, beispielsweise im Bereich des Innenspiegels einer Windschutzscheibe, und durch Schwarzdrucke und Kunststoffblenden abgedeckt.

Derartige Kommunikationsfenster sind zu klein um das Senden und Empfangen hochfrequenter elektromagnetischer Strahlung zu ermöglichen, wie es beispielsweise für Mobiltelefonie und satellitengestützte Navigation notwendig ist. Dennoch erwartet der Benutzer Mobiltelefone an jeder beliebigen Position im Innenraum eines Fahrzeugs betreiben zu können.

Aus der EP 0 717 459 A1, der US 2003/0080909 A1 und der DE 198 17 712 C1 sind Scheiben mit einer metallischen Beschichtung bekannt, die allesamt eine rasterförmige Entschichtung der metallischen Beschichtung aufweisen. Die rasterförmige Entschichtung wirkt als Tiefpass-Filter für eine auftreffende hochfrequente elektromagnetische Strahlung. Die Abstände des Rasters sind klein gegenüber der Wellenlänge der hochfrequenten elektromagnetischen Strahlung und damit wird ein relativ großer Anteil der Beschichtung strukturiert und die Durchsicht in größerem Maße beeinträchtigt. Die Entfernung eines größeren Anteils der Schicht ist langwierig und kostenintensiv.

Die Aufgabe der vorliegenden Erfindung besteht nunmehr darin, eine Scheibe mit transparenter, elektrisch leitfähiger Beschichtung bereitzustellen, die eine ausreichende Transmission von hochfrequenter elektromagnetischer Strahlung zum Betrieb von Mobiltelefonie in den Bändern GSM 900 und DCS 1800, UMTS und LTE sowie satellitengestützer Navigation (GPS) und WLAN ermöglicht, die optisch ansprechend ist und die Durchsicht durch die Scheibe nicht wesentlich einschränkt, und die kostengünstig hergestellt werden kann. Diese und weitere Aufgaben werden nach dem Vorschlag der Erfindung durch eine Scheibe mit den Merkmalen der unabhängigen Patentansprüche gelöst. Vorteilhafte Ausgestaltungen der Erfindung sind durch die Merkmale der Unteransprüche angegeben.

Ein Verfahren zur Herstellung einer Scheibe mit Hochfrequenz-Transmission sowie die Verwendung einer solchen Scheibe gehen aus weiteren unabhängigen Patentansprüchen hervor.

Eine erfindungsgemäße Scheibe umfasst mindestens eine erste Scheibe mit einer Außenseite und einer Innenseite, mindestens eine transparente, elektrisch leitfähige Beschichtung, die auf der Außenseite und/oder der Innenseite der ersten Scheibe angeordnet ist und mindestens einen Bereich mit mindestens einer äußeren entschichteten Struktur und einer inneren entschichteten Struktur, wobei zwischen der äußeren entschichteten Struktur und der inneren entschichteten Struktur und innerhalb der inneren entschichteten Struktur die transparente, elektrisch leitfähige Beschichtung vorliegt.

Die vorliegende Erfindung beruht auf der Erkenntnis, dass eine erfindungsgemäße Scheibe mit äußeren und inneren entschichteten Strukturen eine ausreichend hohe Durchlässigkeit für hochfrequente elektromagnetische Strahlung aufweist. Im Gegensatz zu Scheiben nach dem Stand der Technik ist es nicht notwendig die transparente, elektrisch leitfähige Beschichtung großflächig zu entschichten. Es genügen entschichtete Strukturen mit einer nur geringen Linienbreite, die die optische Durchsicht und das ästhetische Erscheinungsbild der Scheibe nicht wesentlich beeinträchtigen.

Die erfindungsgemäße Scheibe kann dazu als Einzelscheibe aus einer ersten Scheibe mit einer transparenten, elektrisch leitfähigen Beschichtung ausgebildet sein.

Alternativ kann die erfindungsgemäße Scheibe als Verbundscheibe ausgebildet sein. Eine erfindungsgemäße Verbundscheibe umfasst bevorzugt eine erste Scheibe, eine Zwischenschicht und eine zweite Scheibe sowie mindestens eine transparente, elektrisch leitfähige Beschichtung, die zwischen der Zwischenschicht und der ersten Scheibe und/oder zwischen der Zwischenschicht und der zweiten Scheibe angeordnet ist. Die transparente, elektrisch leitfähige Beschichtung kann auch auf einer Trägerfolie angeordnet sein, die bevorzugt über weitere Zwischenschichten innerhalb der ersten und der zweiten Scheibe einlaminiert wird.

Die erste Scheibe und/oder die zweite Scheibe kann sowohl im Falle der Einzelscheibe als auch im Falle der Verbundscheibe eine einzelne Scheibe oder eine bereits laminierte Verbundscheibe aus zwei oder mehr Scheiben sein, die durch die Lamination eine fest verbundene Einheit bilden.

In einer vorteilhaften Ausgestaltung der erfindungsgemäßen Scheibe weisen die äußere entschichtete Struktur und die innere entschichtete Struktur die Form eines Rechtecks, einer Raute, eines Trapezes und insbesondere eines Quadrats auf. Alternativ können die entschichteten Strukturen die Form eines Kreuzes, eines Ovals oder eines Kreises aufweisen. Mit diesen Formen konnten besonders hohe Durchlässigkeiten für hochfrequente elektromagnetische Strahlung erzielt werden.

Alternativ können die entschichteten Strukturen die Form eines Hexagons, insbesondere eines regelmäßigen Hexagons mit gleich langen Seiten oder eines Oktagons, insbesondere eines regelmäßigen Oktagons, aufweisen. Mit diesen Formen konnten besonders hohe Durchlässigkeiten für hochfrequente elektromagnetische Strahlung unter unterschiedlichen Polarisationsrichtungen erzielt werden.

In einer vorteilhaften Ausgestaltung der erfindungsgemäßen Scheibe ist die äußere entschichtete Struktur vollständig von der transparenten, elektrisch leitfähigen Beschichtung umrandet. Mit anderen Worten: die äußere entschichtete Struktur an ihrem außenliegenden Randes vollständig von der transparenten elektrisch leitfähigen Beschichtung umrandet.

In einer weiteren vorteilhaften Ausgestaltung der erfindungsgemäßen Scheibe ist die innere entschichtete Struktur an ihrem innenliegenden Rand vollständig von der transparenten, elektrisch leitfähigen Beschichtung umrandet.

In einer weiteren vorteilhaften Ausgestaltung ist der Zwischenbereich zwischen äußerer entschichteter Struktur und innerer entschichteter Struktur vollständig mit der transparenten, elektrisch leitfähigen Beschichtung gefüllt. Die so entstandene Doppelstruktur hat den besonderen Vorteil, dass hohe Durchlässigkeiten für hochfrequente elektromagnetische Strahlung mit nur einem geringen Strukturierungsaufwand erzielt werden. Gleichzeitig kann die Prozesszeit und die Prozesskosten niedrig gehalten werden.

In einer vorteilhaften Ausgestaltung der erfindungsgemäßen Scheibe beträgt der Abstand b zwischen den entschichteten Strukturen von 0,5 mm bis 30 mm, bevorzugt von 1 mm bis 5 mm. Bei diesem Abstand b konnten besonders niedrige Transmissionsdämpfungen für hochfrequente elektromagnetische Strahlung beobachtet werden. Es versteht sich, dass der optimale Abstand b von der Frequenz der hochfrequenten elektromagnetischen Strahlung abhängt, für die die Transmission durch die Scheibe optimiert ist. Dies kann durch einfache Simulationen ermittelt werden.

Die äußere entschichtete Struktur und die innere entschichtete Struktur weisen insbesondere die gleiche Form auf. In einer besonders vorteilhaften Ausgestaltung sind die äußere entschichtete Struktur und die innere entschichtete Struktur konzentrisch zueinander angeordnet. Das heißt, beide entschichtete Strukturen haben ein gemeinsames Zentrum und bei gleicher Form einen konstanten Abstand zwischen den entschichteten Linien der Struktur.

In einer weiteren vorteilhaften Ausgestaltung einer erfindungsgemäßen Scheibe sind mehrere entschichtete Strukturen mit verschiedenen Formen auf einer Scheibe angeordnet. Dies hat den besonderen Vorteil, dass eine größere Bandbreite für mehrere Frequenzbereiche und unterschiedliche Polarisationen erzielt werden kann.

In einer weiteren vorteilhaften Ausgestaltung ist der Innenbereich der inneren entschichteten Struktur vollständig mit der transparenten, elektrisch leitfähigen Beschichtung gefüllt oder weist lediglich eine oder mehrere weitere Doppelstrukturen aus weiteren, kleineren äußeren entschichteten Strukturen und weiteren, kleineren inneren entschichteten Strukturen auf. Dadurch lassen sich besonders hohe Durchlässigkeiten für hochfrequente elektromagnetische Strahlung mit nur einem geringen Strukturierungsaufwand erzielen. Gleichzeitig können die Prozesszeit und die Prozesskosten niedrig gehalten werden.

In einer weiteren vorteilhaften Ausgestaltung einer erfindungsgemäßen Scheibe sind die äußere entschichtete Struktur und die innere entschichtete Struktur durch mindestens eine zusätzliche entschichtete Linie und bevorzugt durch 2 bis 100 zusätzliche entschichtete Linien miteinander verbunden. Die zusätzliche entschichtete Linie ist bevorzugt geradlinig und/oder orthogonal zu den entschichteten Strukturen angeordnet. Der Abstand der Linien ist bevorzugt kleiner als ein Viertel der Wellenlänge λ der hochfrequenten elektromagnetischen Strahlung und besonders bevorzugt von λ/20 bis λ/500. Alternativ kann die zusätzliche entschichtete Linie einen geschwungenen und beispielsweise einen sinusförmigen Verlauf haben. Die zusätzlichen entschichteten Linien haben den besonderen Vorteil, dass sich zwischen der äußeren entschichteten Struktur 4.1 und der inneren entschichteten Struktur 4.2. weniger störende feldinduzierte Ströme ausbilden können. Dadurch können besonders hohe Durchlässigkeiten für hochfrequente elektromagnetische Strahlung erzielt werden. In einer besonders vorteilhaften Ausgestaltung beträgt die Fläche der zusätzliche entschichtete Linien zwischen äußerer entschichteter Struktur und innerer entschichteter Struktur von 0,1% bis 25% und bevorzugt von 1% bis 5% der Fläche des Zwischenbereichs zwischen äußerer entschichteter Struktur und innerer entschichteter Struktur. Dadurch lassen sich hohe Durchlässigkeiten für hochfrequente elektromagnetische Strahlung mit nur einem geringen Strukturierungsaufwand erzielen. Gleichzeitig können die Prozesszeit und die Prozesskosten niedrig gehalten werden.

In einer weiteren vorteilhaften Ausgestaltung weisen die erfindungsgemäßen entschichteten Strukturen eine Linienbreite d von 0,025 mm bis 0,3 mm und bevorzugt von 0,03 mm bis 0,14 mm auf. Derartige Linienbreiten sind technisch einfach herzustellen, beispielsweise durch Laserstrukturierung. Des Weiteren beeinträchtigen sie kaum die optische Durchsicht durch die Scheibe.

Die transparente, elektrisch leitfähige Beschichtung umfasst mindestens einen Bereich mit entschichteten Strukturen, bevorzugt mindestens vier Bereiche und besonders bevorzugt 10 bis 50 Bereiche. Die Bereiche sind bevorzugt horizontal und/oder vertikal angeordnet. Eine geringfügige Abweichung von der horizontalen und/oder vertikalen Anordnung kann sich dadurch ergeben, dass entschichtete Strukturen in der transparenten, elektrisch leitfähigen Beschichtung auf einer planen Scheibe entschichtet werden und die Scheibe mit den entschichteten Strukturen anschließend gebogen wird. Mit einer derartigen Verteilung der entschichteten Linien lässt sich eine besonders niedrige Transmissionsdämpfung und günstige Verteilung der Empfangs- und Sendeleistung hinter der Scheibe erzielen. Ein Bereich mit horizontal und/oder vertikal angeordneten entschichteten Strukturen kann auch in seiner Gesamtheit einen Winkel $\alpha$ zur Horizontalen aufweisen, beispielsweise von 10° bis 80° und bevorzugt von 30° bis 50°.

Der Flächenanteil der Bereiche, die die entschichteten Strukturen und die Zwischenräume unmittelbar benachbarter entschichteter Strukturen umfassen, beträgt vorteilhafterweise von 7 % bis 25 % der Gesamtfläche der Scheibe. Mit diesem Flächenanteil lässt sich eine besonders niedrige Transmissionsdämpfung und günstige Verteilung der Empfangs- und Sendeleistung hinter der Scheibe erzielen. Gleichzeitig ergibt sich ein günstiges Verhältnis von Verbesserung der Transmission zu den Prozesskosten für die Entschichtung.

Die Anzahl der Bereiche und entschichteten Strukturen richtet sich nach den Anforderungen an die Transmissionsdämpfung und den Abmessungen der Scheibe. Im Falle einer Windschutzscheibe ist insbesondere die Größe und Ausgestaltung des Innenraums zu beachten.

In einer vorteilhaften Ausgestaltung der Erfindung als Windschutzscheibe sind die Bereiche mit den entschichteten Strukturen außerhalb des A-Sichtfeldes des Fahrers angeordnet. Das A-Sichtfeld des Fahrers wird beispielsweise nach Anhang 18 ECE R43 definiert. Obwohl die erfindungsgemäße Linienbreiten der entschichteten Strukturen sehr dünn und daher optisch unauffällig sind, gilt es jede Störung im Sichtfeld des Fahrers zu vermeiden.

In einer vorteilhaften Ausgestaltung der Erfindung beträgt der minimale Abstand h zwischen zwei benachbarten Bereichen mit entschichteten Strukturen von 1 mm bis 100 mm, bevorzugt von 1 mm bis 10 mm und besonders bevorzugt von 2 mm bis 6 mm. Der minimale Abstand h ist dabei insbesondere von der Frequenz abhängig, für die die Scheibe eine optimale Transmission aufweisen soll. Der minimale Abstand h ist bevorzugt der horizontale oder vertikale minimale Abstand zwischen zwei benachbarten Breichen. Für minimale Abstände h von weniger als 1 mm kann eine starke Kopplung zwischen den entschichteten Strukturen erfolgen, die zu einer unerwünschten Erhöhung der Transmissionsdämpfung führt.

Die Länge l der entschichteten Strukturen und insbesondere der maximalen Länge der äußeren entschichteten Struktur beträgt bevorzugt von 10 mm bis 150 mm. Die Länge l ist auf das Frequenzband oder die Frequenzbänder abgestimmt, für die die Scheibe eine möglichst geringe Transmissionsdämpfung aufweisen soll. Des Weiteren ist die Länge l von der Wellenlänge der hochfrequenten elektromagnetischen Strahlung, dem Flächenwiderstand der transparenten, elektrisch leitfähigen Beschichtung und der effektiven relativen Permittivitätszahl $\varepsilon_{eff}$ der Scheiben und der Zwischenschicht abhängig.

Für einen Mobilfunkbetrieb im GSM 900-Band beträgt die Länge l bevorzugt von 35 mm bis 120 mm und besonders bevorzugt von 40 mm bis 60 mm. Im Bereich von 1,8 GHz beträgt die Länge l mit niedriger Transmissionsdämpfung bevorzugt von 15 mm bis 35 mm. Die optimale Länge l mit niedriger Transmissionsdämpfung bei ausreichender Bandbreite kann vom Fachmann im Rahmen einfacher Simulationen und Experimente ermittelt werden.

In einer weiteren bevorzugten Ausführungsform beträgt die Länge l der entschichteten Strukturen und insbesondere die maximalen Länge der äußeren entschichteten Struktur, unter Vernachlässigung des Flächenwiderstands,

von $\lambda/(7 * \sqrt{\varepsilon_{eff}})$ bis $(3 * \lambda)/(2 * \sqrt{\varepsilon_{eff}})$, wobei $\lambda$ die Wellenlänge angibt, für die die Transmission optimiert werden soll. Die Länge l beträgt bevorzugt etwa $\lambda/(4 * \sqrt{\varepsilon_{eff}})$. Wie Untersuchungen der Erfinder ergaben, weisen Strukturen mit Längen l in diesem Bereich eine niedrige Transmissionsdämpfung bei ausreichender Bandbreite auf.

In einer vorteilhaften Ausgestaltung der erfindungsgemäßen Scheibe gilt b/l ≤ 1/5, wobei b der Abstand zwischen äußerer entschichteter Struktur und innerer entschichteter Struktur ist. Wie Untersuchungen der Erfinder ergaben, liefern derartige Verhältnisse zwischen Abstand b und Länge l eine gute und ausreichende Bandbreite in der Transmission durch die erfindungsgemäße Scheibe im geforderten Wellenlängenbereich, für den die Transmission optimiert wurde.

Die Seiten der entschichteten Strukturen sind im Falle von rechteckigen, quadratischen oder trapezförmigen Formen bevorzugt horizontal oder vertikal angeordnet insbesondere bezüglich der Anordnung im eingebauten Zustand der Scheibe an deren Verwendungsort. Besonders vorteilhaft sind in Einbaulage horizontal verlaufende Linien der entschichteten Strukturen, da diese optisch weniger störend sind und weniger Streulicht und Reflektionen verursachen als nicht horizontal oder nicht vertikal verlaufende Linien.

In einer vorteilhaften Ausgestaltung der erfindungsgemäßen Scheibe ist innerhalb einer ersten inneren entschichteten Struktur mindestens eine weitere äußere entschichtete Struktur und innerhalb der weiteren äußeren entschichteten Struktur eine weitere innere entschichtete Struktur angeordnet. Die weiteren entschichteten Strukturen haben bevorzugt die gleiche Form und sind bevorzugt untereinander und in Bezug auf die ersten entschichteten Strukturen konzentrisch angeordnet. Es versteht sich, dass die weiteren entschichteten Strukturen auch andere Formen aufweisen können oder deren Zentrum versetzt angeordnet sein kann. Der Abstand zwischen der ersten äußeren entschichteten Struktur und der ersten inneren entschichteten Struktur ist bevorzugt gleich dem Abstand zwischen der weiteren äußeren entschichteten Struktur und der weiteren inneren entschichteten Struktur. Es versteht sich, dass die Abstände nicht gleich sein müssen. Auf Grund der unterschiedlichen Längen der ineinander verschachtelt angeordneten äußeren entschichteten Strukturen weisen derartige erfindungsgemäße Scheiben eine verbesserte Transmission für mehrere Frequenzbereiche auf.

Die Scheibe enthält bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Geeignete Gläser sind beispielsweise aus EP 0 847 965 B1 bekannt.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Die Größe der Scheibe kann breit variieren und richtet sich nach der Größe der erfindungsgemäßen Verwendung.

In einer vorteilhaften Ausgestaltung der Erfindung hat die Scheibe dielektrische Eigenschaften und eine relative Permittivitätszahl von 2 bis 8. Eine Scheibe aus Polymeren hat bevorzugt eine relative Permittivitätszahl von 2 bis 5. Eine Scheibe aus Glas hat bevorzugt eine relative Permittivitätszahl von 6 bis 8 und insbesondere von etwa 7.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in eine Richtung oder in mehrere Richtungen des Raumes gebogen. Die Scheibe kann farblos oder gefärbt sein.

In einer bevorzugten Ausführungsform der erfindungsgemäßen Scheibe als Verbundscheibe enthält mindestens eine der Scheiben Glas und mindestens eine der Scheiben enthält Kunststoff. Insbesondere bei einer erfindungsgemäßen Verwendung als Fahrzeugscheibe enthält die außenliegende Scheibe Glas und die innenliegende Scheibe Kunststoff.

Die Scheiben der Verbundscheibe werden durch mindestens eine Zwischenschicht miteinander verbunden. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Verbundscheibe den gesetzlichen Bestimmungen für Windschutzscheiben und vorderen Seitenscheiben entspricht und insbesondere für sichtbares Licht bevorzugt >70% und insbesondere >75% durchlässig ist. Für hintere Seitenscheiben und Heckscheiben kann "Durchlässig" auch 10% bis 70% Lichttransmission bedeuten.

Die transparente, elektrisch leitfähige Beschichtung ist bevorzugt eine funktionelle Beschichtung, besonders bevorzugt eine funktionelle Beschichtung mit SonnenschutzWirkung. Eine Beschichtung mit Sonnenschutzwirkung weist reflektierende Eigenschaften im Infrarot-Bereich und damit im Bereich der Sonneneinstrahlung auf. Dadurch wird ein Aufheizen des Innenraums eines Fahrzeugs oder Gebäudes infolge von Sonnenstrahlung vorteilhaft vermindert. Solche Beschichtungen sind dem Fachmann bekannt und enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Besonders geeignete transparente, elektrisch leitfähige Beschichtungen enthalten mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, $SnO_2$:F), Antimon-dotiertes Zinnoxid (ATO, $SnO_2$:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon

Die Dicke der transparenten, elektrisch leitfähigen Beschichtung kann breit variieren und den Erfordernissen des Einzelfalls angepasst werden. Wesentlich ist dabei, dass die Dicke der transparenten, elektrisch leitfähigen Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird. Die transparente, elektrisch leitfähige Beschichtung weist bevorzugt eine Schichtdicke von 10 nm bis 5 $\mu$m und besonders bevorzugt von 30 nm bis 1 $\mu$m auf.

Der Flächenwiderstand der transparenten, elektrisch leitfähigen Beschichtung beträgt bevorzugt von 0,35 Ohm/Quadrat bis 200 Ohm/Quadrat, bevorzugt 0,5 Ohm/Quadrat bis 200 Ohm/Quadrat, ganz besonders bevorzugt von 0,6 Ohm/Quadrat bis 30 Ohm/Quadrat, und insbesondere von 2 Ohm/Quadrat bis 20 Ohm/Quadrat. Die transparente, elektrisch leitfähige Beschichtung kann prinzipiell noch niedrigere Flächenwiderstände als 0,35 Ohm/Quadrat aufweisen, insbesondere wenn bei deren Verwendung nur eine geringe Lichttransmission benötigt wird. Die transparente, elektrisch leitfähige Beschichtung weist bevorzugt gute infrarotreflektierende Eigenschaften und/oder besonders niedrige Emissivitäten (Low-E) auf.

Bei einer vorteilhaften Ausgestaltung der erfindungsgemäßen Verbundscheibe befindet sich mindestens eine transparente, elektrisch leitfähige Schicht auf mindestens einer der innenliegenden Seiten der Scheiben. Im Falle eines Scheibenverbundes aus zwei Scheiben kann sich eine transparente, elektrisch leitfähige Schicht auf der innenliegenden Seite der einen oder der anderen Scheiben befinden. Alternativ kann sich auch jeweils eine transparente, elektrisch leitfähige Schicht auf jeder der beiden innenliegenden Seiten befinden. Im Falle eines Scheibenverbunds aus mehr als zwei Scheiben können sich auch mehrere transparente, elektrisch leitfähige Beschichtungen auf mehreren innenliegenden Seiten der Scheiben befinden. Dabei sind die Bereiche mit entschichteten Strukturen bevorzugt deckungsgleich in den verschiedenen Beschichtungen angeordnet um eine niedrige Transmissionsdämpfung zu gewährleisten

Alternativ kann eine transparente, elektrisch leitfähige Beschichtung zwischen zwei thermoplastischen Zwischenschichten eingebettet sein. Die transparente, elektrisch leitfähige Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

In einer alternativen Ausgestaltung der Erfindung ist die transparente, elektrisch leitfähige Schicht oder eine Trägerfolie mit der transparenten, elektrisch leitfähigen Schicht auf einer Seite einer Einzelscheibe angeordnet.

Die Erfindung umfasst ein Verfahren zur Herstellung einer wie oben beschriebenen erfindungsgemäßen Scheibe, wobei mindestens:

(a) die transparente, elektrisch leitfähige Beschichtung auf der Außenseite und/oder der Innenseite einer ersten Scheibe aufgebracht wird und

(b) mindestens ein Bereich mit mindestens einer äußeren entschichtete Struktur und einer inneren entschichteten Struktur in die transparente, elektrisch leitfähige Beschichtung eingebracht wird, wobei zwischen der äußeren entschichteten Struktur und der inneren entschichteten Struktur und innerhalb der inneren entschichteten Struktur die transparente, elektrisch leitfähige Beschichtung vorliegt.

In einer alternativen Ausführungsform des erfindungsgemäßen Verfahrens kann die transparente, elektrisch leitfähige Beschichtung auf eine Trägerfolie, beispielsweise eine PET-Folie aufgebracht werden. Die Trägerfolie kann direkt oder über mindestens eine Zwischenschicht mit der ersten Scheibe verbunden werden. Der Bereich mit den entschichteten Strukturen kann vor oder nach dem Verbinden mit der ersten Scheibe in die transparente, elektrisch leitfähige Beschichtung eingebracht werden.

Das Aufbringen der transparenten, elektrisch leitfähigen Beschichtung in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die transparenten, elektrisch leitfähigen Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der transparenten, elektrisch leitfähigen Beschichtung dienen.

Die erste Scheibe kann nach Verfahrensschritt (a) gebogen werden, typischerweise bei einer Temperatur von 500°C bis 700°C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die transparente, elektrisch leitfähige Beschichtung nicht dazu geeignet ist, einen Biegeprozess ohne Beschädigungen zu überstehen.

Die Entschichtung der entschichteten Strukturen in der transparenten, elektrisch leitfähigen Beschichtung erfolgt bevorzugt durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 25 µm bis 300 µm und insbesondere 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie der Breite d, die breiter ist als die Breite eines Laserschnitts, erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

Eine vorteilhafte Weiterbildung des erfindungsgemäßen Verfahrens umfasst mindestens die folgenden weiteren Schritte:

(c) Anordnen einer thermoplastischen Zwischenschicht auf der ersten Scheibe und Anordnen einer zweiten Scheibe auf der thermoplastischen Zwischenschicht und

(d) Verbinden der ersten Scheibe und der zweiten Scheibe über die thermoplastische Zwischenschicht.

In Verfahrensschritt (c) wird die erste Scheibe vorteilhafterweise so angeordnet, dass diejenige ihrer Oberflächen, welche mit der elektrisch leitfähigen Beschichtung versehen ist, der Zwischenschicht zugewandt ist. Dies hat den besonderen Vorteil, dass die transparente, elektrisch leitfähige Beschichtung durch das Einlaminieren vor Umwelteinflüssen und Berührung durch den Benutzer geschützt wird.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe in Verfahrensschritt (d) erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130°C bis 145°C über etwa 2 Stunden durchgeführt werden. An sich bekannte Vakuumsack- oder Vakuumringverfahren arbeiten beispielsweise bei etwa 200 mbar und 80°C bis 110°C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40°C bis 150°C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drucken von 0,01 mbar bis 800 mbar und Temperaturen von 80°C bis 170°C laminiert werden.

Zur Herstellung einer gebogenen Verbundscheibe können die erste Scheibe und die zweite Scheibe vor dem Verfahrensschritt (c) in einem an sich bekannten Heißbiegeprozess gebogen werden. Dabei können die erste und die zweite Scheibe vorteilhafterweise gemeinsam gebogen, so dass eine gleiche Krümmung der Scheiben sichergestellt ist.

Die Erfindung erstreckt sich weiterhin auf die Verwendung einer wie oben beschriebenen Scheibe in einer Fahrzeugkarosserie oder einer Fahrzeugtür eines Fortbewegungsmittels zu Lande, zu Wasser oder in der Luft, in Gebäuden als Teil einer Außenfassade oder als Gebäudefenster und/oder als Einbauteil in Möbeln und Geräten.

Die Verwendung einer erfindungsgemäßen Scheibe als Windschutzscheibe ist besonders vorteilhaft. So sind Mobilfunksendestationen beispielsweise entlang von Autobahnen oder Schnellstraßen montiert. Die hochfrequente, elektromagnetische Strahlung kann dann in Fahrtrichtung von vorne durch die erfindungsgemäße Windschutzscheibe in den Innenraum des Fahrzeugs gelangen. In Städten sind die Mobilfunksendestationen üblicherweise auf Dächern oder erhöhten Positionen montiert und strahlen von oben herab. Satellitennavigationssignale strahlen ebenso von oben herab auf ein Fahrzeug ein. Da Windschutzscheiben zur Verbesserung der Aerodynamik eine stark geneigte Einbauposition aufweisen, können Mobilfunksignale oder Satellitennavigationssignale auch von oben, durch die Scheibe hindurch, in den Fahrzeuginnenraum gelangen.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:

| | |
|---|---|
| Figur 1 | eine schematische Darstellung einer erfindungsgemäßen Scheibe in einer Draufsicht, |
| Figur 2 | eine schematische Darstellung einer Scheibe nach dem Stand der Technik in einer Draufsicht, |
| Figur 3A | eine schematische Darstellung einer erfindungsgemäßen Scheibe in einer Draufsicht, |
| Figur 3B | eine Querschnittdarstellung entlang der Schnittlinie A-A' aus Figur 3A, |
| Figur 3C | eine vergrößerte Darstellung des Ausschnitts Y der erfindungsgemäßen Scheibe aus Figur 3A, |
| Figur 3D | eine vergrößerte Darstellung des Ausschnitts Z der erfindungsgemäßen Scheibe aus Figur 3C, |
| Figur 4 | eine Querschnittdarstellung entlang der Schnittlinie A-A' aus Figur 3A eines alternativen Ausführungsbeispiels einer erfindungsgemäßen Scheibe, |
| Figur 5 | eine Querschnittdarstellung entlang der Schnittlinie A-A' aus Figur 3A eines alternativen Ausführungsbeispiels einer erfindungsgemäßen Scheibe, |
| Figur 6 | eine schematische Darstellung eines alternativen Ausführungsbeispiels einer erfindungsgemäßen Scheibe in einer Draufsicht, |
| Figur 7 | eine vergrößerte Darstellung des Ausschnitts Z eines alternativen Ausführungsbeispiels einer erfindungsgemäßen Scheibe aus Figur 3C, |
| Figur 8 | eine vergrößerte Darstellung des Ausschnitts Z eines alternativen Ausführungsbeispiels einer erfindungsgemäßen Scheibe aus Figur 3C, |
| Figur 9 | eine vergrößerte Darstellung des Ausschnitts Z eines alternativen Ausführungsbeispiels einer erfindungsgemäßen Scheibe aus Figur 3C, |
| Figur 10 | eine vergrößerte Darstellung des Ausschnitts Z eines alternativen Ausführungsbeispiels einer erfindungsgemäßen Scheibe aus Figur 3C, |
| Figur 11 | eine vergrößerte Darstellung des Ausschnitts Z eines alternativen Ausführungsbeispiels einer erfindungsgemäßen Scheibe aus Figur 3C, |
| Figur 12A | eine vergrößerte Darstellung des Ausschnitts Y eines alternativen Ausführungsbeispiels einer erfindungsgemäßen Scheibe aus Figur 3A, |
| Figur 12B | eine vergrößerte Darstellung des Ausschnitts Z der erfindungsgemäßen Scheibe aus Figur 11, |
| Figur 13 | eine vergrößerte Darstellung des Ausschnitts Y eines alternativen Ausführungsbeispiels einer erfindungsgemäßen Scheibe aus Figur 3A, |
| Figur 14 | eine vergrößerte Darstellung des Ausschnitts Z eines alternativen Ausführungsbeispiels einer erfindungsgemäßen Scheibe aus Figur 3A, |
| Figur 15 | eine vergrößerte Darstellung des Ausschnitts Y eines alternativen Ausführungsbeispiels einer erfindungsgemäßen Scheibe aus Figur 3A, |
| Figur 16A | ein Flussdiagramm eines Ausführungsbeispiels des erfindungsgemäßen Verfahrens, |
| Figur 16B | ein Flussdiagramm eines Ausführungsbeispiels des erfindungsgemäßen Verfahrens, |
| Figur 17 | ein Diagramm der Transmissionsdämpfung in Abhängigkeit des Abstands h der Bereiche, |
| Figur 18 | ein Diagramm der Transmissionsdämpfung in Abhängigkeit des Abstands b von äußerer und innerer entschichteter Struktur, |
| Figur 19 | ein Diagramm der Transmissionsdämpfung für verschiedene Ausführungsbeispiele, |
| Figur 20 | ein Diagramm der Transmissionsdämpfung für ein alternatives Ausführungsbeispiel einer erfindungsgemäßen Scheibe, |
| Figur 21 | eine schematische Darstellung eines Ausschnitts einer alternativen erfindungsgemäßen Scheibe in einer Draufsicht und |
| Figur 22 | ein Diagramm der Transmissionsdämpfung für das Ausführungsbeispiel einer erfindungsgemäßen Scheibe nach Figur 21. |

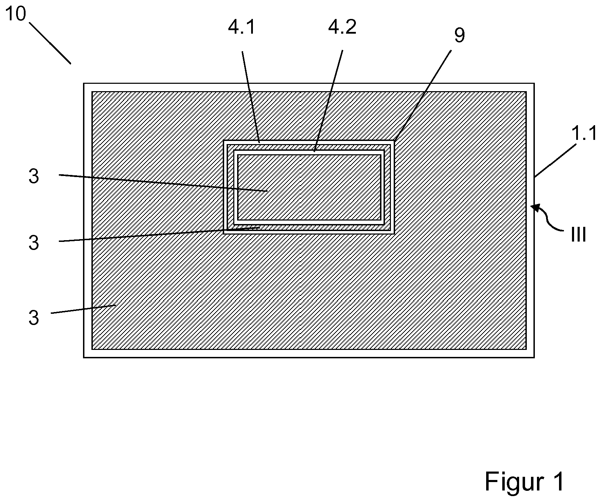

Figur 1 zeigt eine schematische Darstellung einer erfindungsgemäßen Scheibe 10. Die Scheibe 10 umfasst eine erste Scheibe 1.1 auf deren Außenseite III eine transparente elektrisch leitfähige Beschichtung 3 angeordnet ist. Die transparente, elektrisch leitfähige Beschichtung 3 weist einen rechteckförmigen Bereich 9 auf. Der Bereich 9 wird durch die äußere Form einer äußeren entschichteten Struktur 4.1 definiert. Entlang der äußeren entschichteten Struktur 4.1 ist keine transparente, elektrisch leitfähige Beschichtung 3 vorhanden oder die transparente, elektrisch leitfähige Beschichtung 3 wurde entfernt, beispielsweise durch Laserstrukturierung. Innerhalb der äußeren entschichteten Struktur 4.1 ist eine ebenfalls rechteckförmige innere entschichtete Struktur 4.2 angeordnet. Entlang der inneren entschichteten Struktur 4.2 ist keine transparente, elektrisch leitfähige Beschichtung 3 vorhanden oder die transparente, elektrisch leitfähige Beschichtung 3 wurde entfernt, beispielsweise durch Laserstrukturierung. Die äußere entschichtete Struktur 4.1 ist vollständig von der transparenten, elektrisch leitfähigen Beschichtung 3 umrandet. Des Weiteren ist zwischen äußerer entschichteter Struktur 4.1 und innerer entschichteter Struktur 4.2 sowie innerhalb der inneren entschichteten Struktur 4.2 ein Teil der transparenten, elektrisch leitfähigen Beschichtung 3 angeordnet. Im vorliegenden Beispiel sind der Zwischenbereich zwischen äußerer entschichteter Struktur 4.1 und innerer entschichteter Struktur 4.2 sowie der Innenbereich der inneren entschichteten Struktur 4.2 vollständig mit der transparenten, elektrisch leitfähigen Beschichtung 3 gefüllt. Durch die äußere entschichtete Struktur 4.1 und die innere entschichtete Struktur 4.2 wird die ansonsten für hochfrequente elektromagnetische Strahlung undurchlässige transparente, elektrisch leitfähige Beschichtung 3 durchlässig. Die entschichteten Strukturen 4.1, 4.2 werden beispielsweise durch Laserstrukturierung entschichtet und haben nur eine sehr geringe Linienbreite von beispielsweise 0,1 mm. Die Durchsicht durch die erfindungsgemäße Scheibe 10 ist nicht wesentlich beeinträchtigt und die entschichteten Strukturen 4.1, 4.2 sind kaum erkennbar.

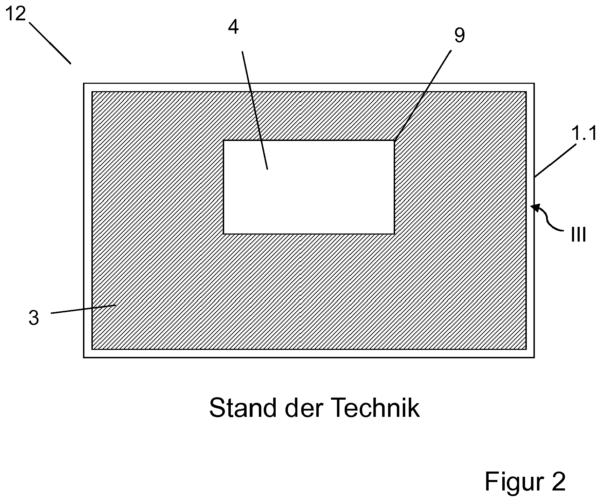

Figur 2 zeigt eine schematische Darstellung einer Scheibe 12 nach dem Stand der Technik. Die Scheibe 12 umfasst wie die Scheibe 10 aus Figur 1 eine erste Scheibe 1.1 auf deren Außenseite III eine transparente, elektromagnetische Beschichtung 3 angeordnet ist. Um die Scheibe 12 für hochfrequente elektromagnetische Strahlung durchlässig zu machen, weißt die transparente, elektromagnetische Beschichtung 3 einen rechteckförmigen entschichteten Bereich 4 auf. Im Gegensatz zur erfindungsgemäßen Scheibe 10 auf Figur 1 ist die Fläche des entschichteten Bereichs 4 sehr groß und die Entschichtung deutlich auf der Scheibe 12 zu erkennen. Eine solche Scheibe 12 ist in ihrer Durchsicht beeinträchtigt und beispielsweise nicht als Scheibe in einem Fahrzeug geeignet.

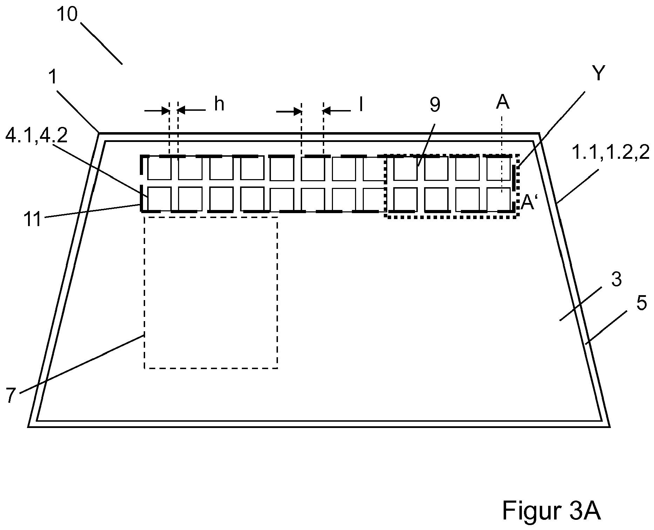

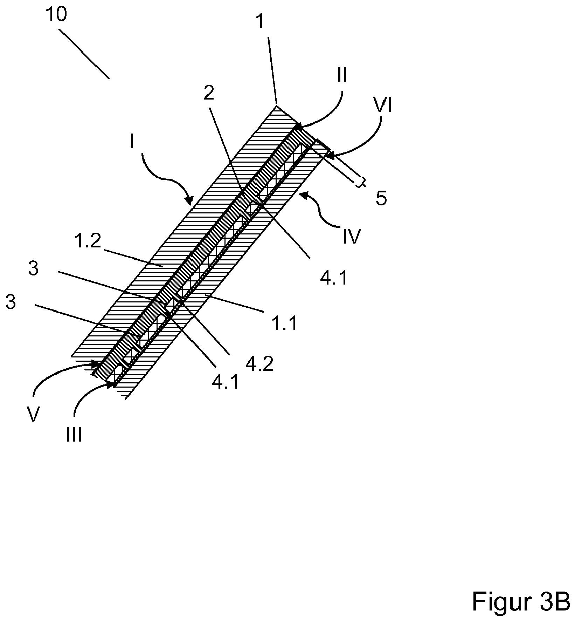

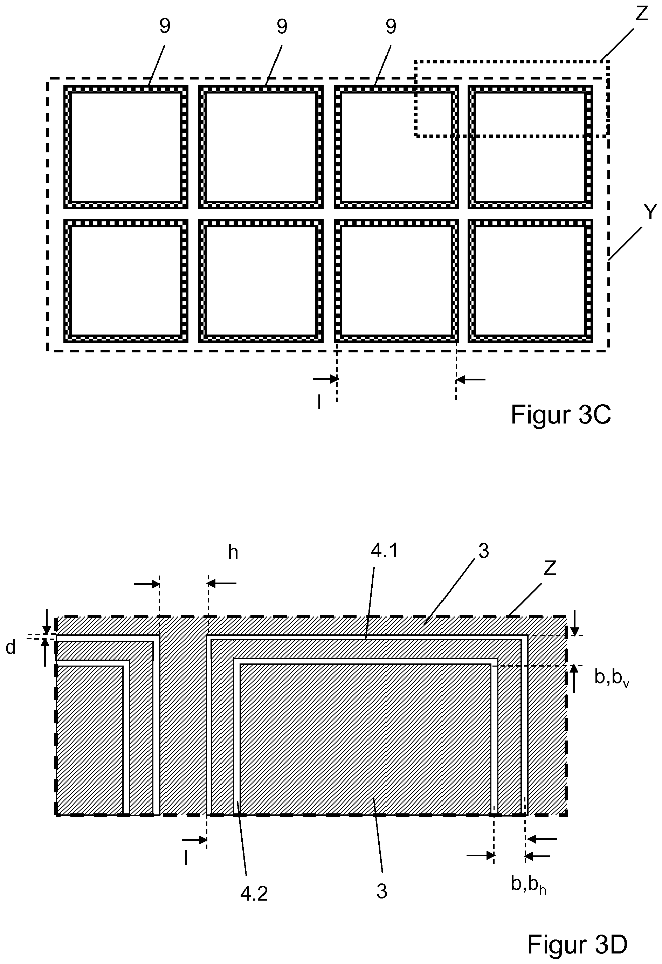

Figur 3A zeigt eine schematische Darstellung einer erfindungsgemäßen Scheibe 10 am Beispiel einer Fahrzeugwindschutzscheibe in einer Draufsicht. Figur 3B zeigt eine Querschnittsdarstellung entlang der Schnittlinie A-A' aus Figur 3A am Beispiel einer Verbundscheibe. Figur 3C zeigt einen vergrößerten Ausschnitt Y aus Figur 3A und Figur 3D einen vergrößerten Ausschnitt Z aus Figur 3C. Die Scheibe 10 ist ohne die Erfindung einzuschränken für die Transmission von Mobilfunkstrahlung im GSM 900-Band optimiert. Die Scheibe 10 umfasst eine Verbundscheibe 1 aus zwei einzelnen Scheiben, nämlich einer starren erste Scheibe 1.1 und einer starren zweite Scheibe 1.2, die über eine thermoplastische Zwischenschicht 2 fest miteinander verbunden sind. Die einzelnen Scheiben 1.1,1.2 haben in etwa eine gleiche Größe und sind beispielsweise aus Glas, insbesondere Floatglas, Gussglas und Keramikglas gefertigt, wobei sie gleichermaßen aus einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephthalat (PET) hergestellt sein können. Allgemein kann jedes Material mit hinreichender Transparenz, ausreichender chemischer Beständigkeit sowie geeigneter Form- und Größenstabilität verwendet werden. Für eine anderweitige Verwendung, beispielsweise als Dekorteil, wäre es auch möglich, die erste Scheibe 1.1 und die zweite Scheibe 1.2 aus einem flexiblen und/oder einem nichttransparenten Material herzustellen. Die jeweilige Dicke der ersten Scheibe 1.1 und der zweiten Scheibe 1.2 kann je nach Verwendung breit variieren und kann für Glas beispielsweise im Bereich von 1 bis 24 mm liegen. Im vorliegenden Beispiel haben die erste Scheibe 1.1 eine Dicke von 2,1 mm und die zweite Scheibe 1.2 eine Dicke von 1,8 mm.

Die Scheibenflächen sind mit den römischen Ziffern I-IV bezeichnet, wobei Seite I der Außenseite der zweiten Scheibe 1.2, Seite II der Innenseite der zweiten Scheibe 1.1, Seite III der Außenseite der ersten Scheibe 1.1 und Seite IV der Innenseite der ersten Scheibe 1.1 der Verbundscheibe 1 entspricht. Außenseite ist im Sinne der vorliegenden Erfindung die Seite einer Scheibe, die dem Fahrzeugaußenraum zugewandt ist. Innenseite ist die Seite einer Scheibe, die dem Fahrzeuginnenraum zugewandt ist. In der Verwendung als Windschutzscheibe ist die Seite I der äußeren Umgebung und die Seite IV der Fahrgastzelle des Kraftfahrzeugs zugewandt. Es versteht sich, dass die Seite IV auch nach außen weisen kann und die Seite I der Fahrgastzelle des Kraftfahrzeugs zugewandt sein kann.

Die Zwischenschicht 2 zur Verbindung von erster Scheibe 1.1 und zweiter Scheibe 1.2 enthält vorzugsweise einen klebenden Kunststoff bevorzugt auf Basis von Polyvinylbutyral (PVB), Ethylen-Vinyl-Acetat (EVA) oder Polyurethan (PU).

Die Verbundscheibe 1 ist für sichtbares Licht beispielsweise im Wellenlängenbereich von 350 nm bis 800 nm transparent, wobei unter dem Begriff "Transparenz" eine Lichtdurchlässigkeit von mehr als 50%, vorzugsweise mehr als 70% und insbesondere bevorzugt mehr als 75% zu verstehen ist.

Die relative Permittivitätszahl der Scheiben 1.1,1.2 der Verbundscheibe 1 beträgt für Scheiben aus Floatglas von 6 bis 8 und beispielsweise 7.

Im dargestellten Beispiel ist die transparente, elektrisch leitfähige Beschichtung 3 auf die der Zwischenschicht 2 zugewandten Seite III der innenliegenden ersten Scheibe 1.1 aufgebracht. Die transparente, elektrisch leitfähige Beschichtung 3 dient beispielsweise als infrarotreflektierende Schicht der Verbundscheibe 1. Das bedeutet, dass der Anteil an Wärmestrahlung von eintretendem Sonnenlicht zu einem großen Teil reflektiert wird. Bei Verwendung der Verbundscheibe 1 in einem Fahrzeug sorgt dies für eine verringerte Erwärmung des Innenraums bei Sonneneinstrahlung. Die transparente, elektrisch leitfähige Beschichtung 3 ist beispielsweise aus EP 0 847 965 B1 bekannt und enthält zwei Silberschichten, die jeweils zwischen mehreren Metall- und Metalloxidschichten eingebettet sind. Die transparente, elektrisch leitfähige Beschichtung 3 hat einen Flächenwiderstand von etwa 4 Ohm/Quadrat. Die transparente, elektrisch leitfähige Beschichtung 3 kann auch als elektrisch beheizbare Beschichtung dienen und mittels an sich bekannter Sammelleiter kontaktiert und mit einer Spannungsquelle verbunden werden.

Die transparente, elektrisch leitfähige Beschichtung 3 kann gleichwohl auf die der thermoplastischen Zwischenschicht 2 zugewandten Seite II der außenliegenden, zweiten Scheibe 1.2, oder auf beiden Scheibeninnenseiten II und III angeordnet sein. Die transparente, elektrisch leitfähige Beschichtung 3 kann zusätzlich oder ausschließlich auf einer der Außenseiten I und IV oder beiden Außenseiten I und IV der Verbundscheibe 1 angeordnet sein.

Die transparente, elektrisch leitfähige Beschichtung 3 ist auf der gesamten ersten Scheibe 1.1 aufgebracht, abzüglich eines randentschichteten Bereichs 5. Die Randentschichtung im Bereich 5 verhindert einen Kontakt der transparenten, elektrisch leitfähigen Beschichtung 3, was bei korrosionsempfindlichen Beschichtungen vorteilhaft ist. Weiterhin ist die zweite Scheibe 1.2 beispielsweise mit einer opaken Farbschicht versehen, die auf der Seite II aufgebracht ist und einen rahmenförmig umlaufenden Maskierungsstreifen bildet, welcher in den Figuren nicht näher dargestellt ist. Die Farbschicht besteht vorzugsweise aus einem elektrisch nichtleitenden, schwarz eingefärbten Material, das in die erste 1.1 oder die zweite Scheibe 1.2 eingebrannt werden kann. Der Maskierungsstreifen verhindert einerseits die Sicht auf einen Klebestrang, mit dem die Verbundscheibe 1 in die Fahrzeugkarosserie eingeklebt ist, andererseits dient er als UV-Schutz für das verwendete Klebematerial.

Des Weiteren ist die transparente, elektrisch leitfähige Beschichtung 3 in mehreren Bereichen 9 teilweise entschichtet. Im dargestellten Beispiel aus Figur 3A sind jeweils zwei nahezu vertikal übereinander angeordnete Reihen von jeweils 12 Bereichen 9 angeordnet. Die 24 Bereiche 9 sind in einem Abschnitt 11 am oberen Rand der Scheibe 1 horizontal nebeneinander angeordnet. Die Begriffe vertikal und horizontal geben die Position in Einbaulage der Fahrzeugscheibe wieder. Die 24 Bereiche 9 sind am oberen Scheibenrand der längeren Seite der Scheibe 1 und außerhalb des A-Sichtfeldes 7 des Fahrers gemäß Anhang 18 der ECE R43 angeordnet.

Am oberen Rand der Scheibe 10 sind zwei vertikal übereinander angeordnete Reihen von jeweils 12 Bereichen 9 mit entschichteten Strukturen 4.1, 4.2 angeordnet. Die Fläche der 24 Bereiche 9 bedeckt etwa 7 % der Gesamtfläche der Verbundscheibe 1. Dieser Flächenanteil ergibt ein besonders günstiges Verhältnis zwischen Prozesskosten, optischem Aspekt und Transmission. Der horizontale und der vertikale Abstand h zwischen zwei Bereichen 9 beträgt beispielsweise 2 mm.

Figur 3C zeigt einen vergrößerten Ausschnitt Y aus Figur 3A mit acht Bereichen 9 und Figur 3D zeigt einen vergrößerten Ausschnitt Z aus Figur 3C. Jeder Bereich 9 enthält eine äußere entschichtete Struktur 4.1 und eine innere entschichtete Struktur 4.2 mit quadratischer Form. Die oberen und unteren Seiten der quadratischen Form sind horizontal zur Einbaurichtung angeordnet. Diese horizontale Ausrichtung ist besonders vorteilhaft für den Empfang von vertikal gesendetem Mobilfunk. Die Erfindung umfasst ebenso unter verschiedenen Winkeln angeordnete entschichtete Strukturen 4.1, 4.2, wenn dies zweckdienlich ist.

Die Linienbreite d der Entschichtung der entschichteten Strukturen 4.1, 4.2 ist konstant und beträgt beispielsweise 100 $\mu$m. Derartig kleine Linienbreiten sind für optisch für das Auge kaum wahrnehmbar und beeinträchtigen nicht die Durchsicht durch die Scheibe 10, so dass die Scheibe 10 für den Einsatz als Windschutzscheibe eines Fahrzeugs geeignet ist.

Der Abstand b der äußeren entschichteten Struktur 4.1 zur inneren entschichteten Struktur 4.2 beträgt sowohl in vertikaler Richtung ($b_v$) als auch in horizontaler Richtung ($b_h$) beispielsweise 1 mm. Es versteht sich, dass die Abstände $b_v$ und $b_h$ nicht gleich sein müssen. Die äußerere entschichtete Struktur 4.1 bestimmt die Abmessungen des Bereichs 9. und insbesondere die Länge I des Bereichs. In dargestellten Beispiel weist die äußere entschichtete Struktur 4.1 eine Länge I von beispielsweise 42 mm auf. Der Abstand b nimmt insbesondere Einfluss auf die Bandbreite und die Höhe der Transmissionsdurchlässigkeit für hochfrequente elektromagnetische Strahlung.

Die Länge I ist auf die hochfrequente elektromagnetische Strahlung mit Frequenz f abgestimmt, für die die Scheibe 10 maximal durchlässig sein soll. Die Länge I ist für entschichtete Strukturen mit quadratischer Form in erster Näherung über die Beziehung $I = c/(4 \cdot f \cdot (\varepsilon_{eff})^{0,5})$ von der effektiven relativen Permittivitätszahl $\varepsilon_{eff}$ der Scheibe 1.1, 1.2 und der Zwischenschicht 2 abhängig, wobei c die Lichtgeschwindigkeit ist. Auf Grund von benachbart angeordneten Bereiche 9 mit entschichteten Strukturen 4.1, 4.2 kann es zur Beeinflussung der Bereiche 9 untereinander und damit zur Ausbildung von Resonanzen und Frequenzverschiebungen, die eine Anpassung und Optimierung der Länge I, der Breite b, des vertikalen Abstands d und des horizontalen Abstand h notwendig machen. Diese können durch dem Fachmann geläufige Simulationen berechnet werden.

Die Scheibe 10 aus Figur 3A wurde für den Betrieb des Mobilfunkbandes GSM 900 optimiert. Durch Variation der Parameter, wie der Länge I der entschichteten Bereiche kann die Scheibe 10 in einfacher Weise für die Transmission anderer Frequenzbänder oder mehrerer Frequenzbänder optimiert werden.

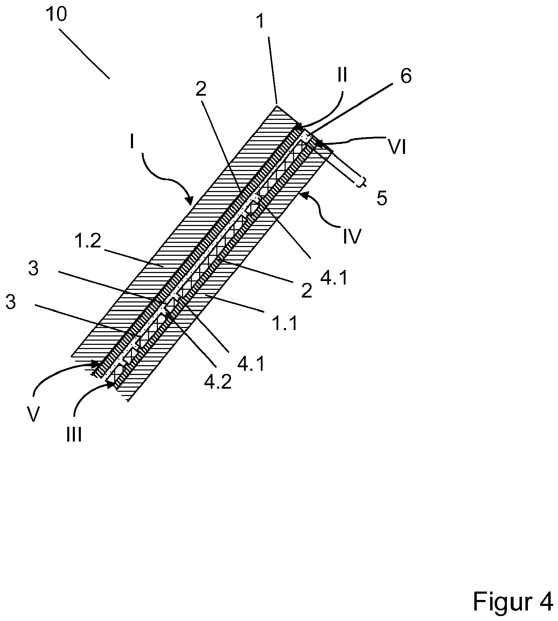

Figur 4 zeigt eine Querschnittdarstellung entlang der Schnittlinie A-A' aus Figur 3A eines Ausführungsbeispiels einer erfindungsgemäßen Scheibe 10 mit einer Verbundscheibe 1. In diesem Ausführungsbeispiel sind die erste Scheibe 1.1 und die zweite Scheibe 1.2 mit einer dreilagigen Zwischenschicht verbunden. Die dreilagige Zwischenschicht enthält eine Folie 6, die beispielsweise Polyethylenterephthalat (PET) enthält, und die zwischen zwei Schichten 2 eines klebenden Kunststoffs, beispielsweise Polyvinylbutyral (PVB) angeordnet ist. Die PET-Folie ist hier beispielsweise als Träger der transparenten, elektrisch leitfähigen Beschichtung 3 ausgebildet.

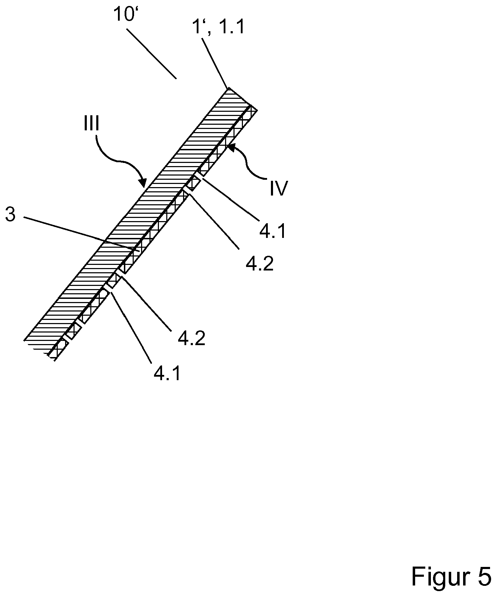

Figur 5 zeigt eine Querschnittdarstellung entlang der Schnittlinie A-A' aus Figur 3A eines Ausführungsbeispiels einer erfindungsgemäßen Scheibe 10 mit einer Einzelscheibe 1'. Die transparente, elektrisch leitende Beschichtung 3 mit den Bereichen 9 mit entschichteten Strukturen 4.1,4.2 ist auf der dem Fahrzeuginnenraum zugewandten Innenseite IV der Einzelscheibe 1' angeordnet. Form und Material der Einzelscheibe 1' entsprechen der ersten Scheibe 1.1 aus Figur 3A. Die transparente, elektrisch leitende Beschichtung 3 und die Bereiche 9 entsprechen ebenso dem Ausführungsbeispiel von Figur 3A. Die transparente, elektrisch leitfähige Beschichtung 3 ist hier beispielsweise eine sogenannte Low-E-Schicht und weißt eine niedrige Emissivität für Infrarotstrahlung auf. Die transparente, elektrisch leitfähige Beschichtung 3 enthält oder besteht beispielsweise aus einer Indiumzinnoxid (ITO)-Schicht mit einem Flächenwiderstand von 20 Ohm/Quadrat. Die Indiumzinnoxid-Schicht inert gegenüber Umwelteinflüssen und kratzfest ausgebildet, so dass die Indiumzinnoxid-Schicht beispielsweise auf der einem Fahrzeuginnenraum zugewandten Oberfläche einer Seitenscheibe eines Kraftfahrzeugs angeordnet sein kann.

Alternativ kann eine kratz- und korrosionsempfindliche oder eine stromdurchflossene beheizbare transparente, elektrisch leitfähige Beschichtung 3 durch eine Isolationsschicht geschützt sein, die beispielsweise eine Polymerfolie wie Polyethylenterephthalat (PET) oder Polyvinylfluorid (PVF) enthält. Alternativ kann die transparente, elektrisch leitfähige Beschichtung 3 eine isolierende und kratzfeste Deckschicht aus anorganischen Oxiden aufweisen, wie Siliziumoxid, Titanoxid, Tantalpentoxid oder Kombinationen daraus.

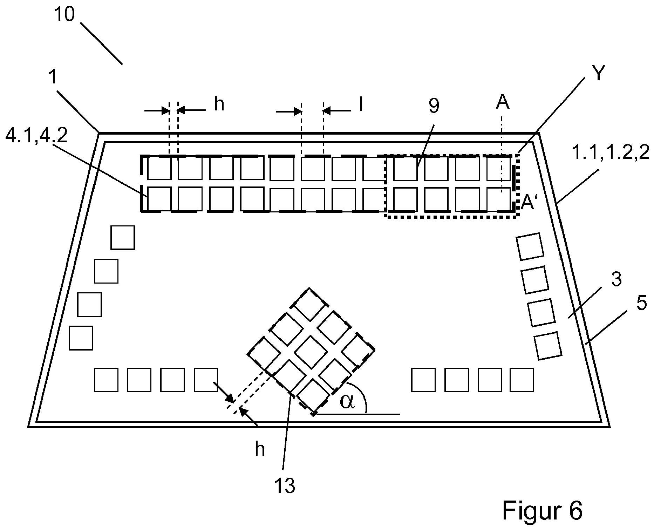

Figur 6 zeigt eine schematische Darstellung eines alternativen Ausführungsbeispiels einer erfindungsgemäßen Scheibe 10 in einer Draufsicht. Im Unterschied zu Figur 3A sind weitere Bereiche 9 an den seitlichen Rändern und am unteren Rand der Scheibe 10 angeordnet. Durch die weiteren Bereiche 9 kann die erfindungsgemäße Durchlässigkeit für elektromagnetische Strahlung innerhalb des Fahrzeuginnenraums erhöht werden. Eine Verbesserung der Durchlässigkeit kann insbesondere am unteren Rand der Scheibe 10 erzielt werden und somit der Empfang und die Sendeleistung von Sensoren, beispielsweise GPS-Sensoren, die im Armaturenbrett installiert sind, verbessert werden. Am unteren Rand der Scheibe ist eine Anordnung 13 von beispielsweise neun zueinander horizontal und vertikal angeordneten Bereichen 9 angeordnet. Die Anordnung 13 weist einen Winkel $\alpha$ von beispielsweise 45° zum unteren Rand der Scheibe 10 und damit zur Horizontalen in Einbaulage der Scheibe 10 auf. Die Anordnung 13 der Bereiche 9 in horizontaler und vertikaler Lage zueinander führt zu einer besonders hohen Transmission durch diesen Bereich der Scheibe 10.

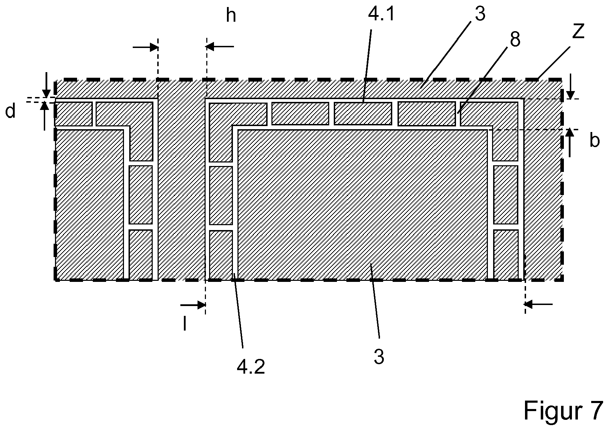

Figur 7 zeigt eine vergrößerte Darstellung des Ausschnitts Z eines alternativen Ausführungsbeispiels einer erfindungsgemäßen Scheibe aus Figur 3D. Im Unterschied zu Figur 3D sind die äußere Struktur 4.1 und die innere Struktur 4.2 durch vier entschichtete Linien 8 pro Seite verbunden. Die entschichteten Linien 8 sind dabei orthogonal zu den Seitenlinien der äußeren Struktur 4.1 und der inneren Struktur 4.2 angeordnet. Die entschichteten Linien 8 weisen beispielsweise eine Linienbreite d von 0,1 mm auf, was der Linienbreite d der entschichteten Strukturen 4.1,4.2 entspricht. Der Abstand der Linien 8 sollte kleiner sein als ein Viertel der Wellenlänge $\lambda$ der hochfrequenten elektromagnetischen Strahlung und bevorzugt von $\lambda/20$ bis $\lambda/500$, so dass sich zwischen der äußeren entschichteten Struktur 4.1 und der inneren entschichteten Struktur 4.2. weniger störende feldinduzierte Ströme ausbilden können. Durch die entschichteten Linien 8 wird die Transmissionsdämpfung der hochfrequenten elektromagnetischen Strahlung deutlich erniedrigt und gleichzeitig der Aufwand bei der Laserbearbeitung der transparenten, elektrisch leitfähigen Beschichtung 3 nur geringfügig erhöht.

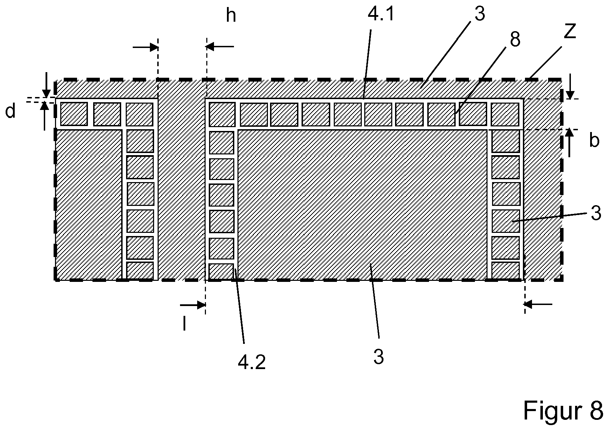

Figur 8 zeigt eine vergrößerte Darstellung des Ausschnitts Z eines alternativen Ausführungsbeispiels einer erfindungsgemäßen Scheibe 10 aus Figur 3D. Im Unterschied zu Figur 5 sind die äußere Struktur 4.1 und die innere Struktur 4.2 durch neun entschichtete Linien 8 pro Seite verbunden. Dadurch werden die Transmissionseigenschaften im Vergleich zu einer Scheibe 10 nach Figur 7 weiter verbessert, das heißt insbesondere die Transmissionsdämpfung erniedrigt.

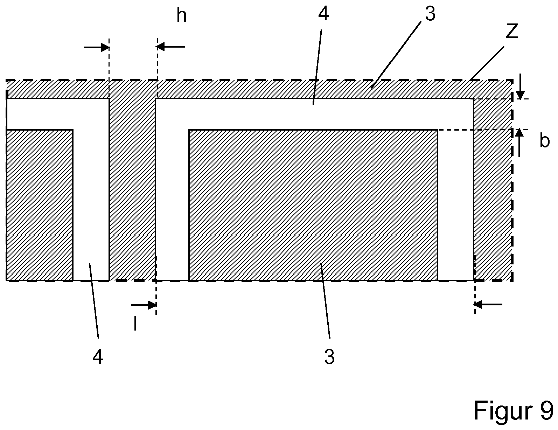

Figur 9 zeigt eine vergrößerte Darstellung des Ausschnitts Z eines alternativen Ausführungsbeispiels einer erfindungsgemäßen Scheibe 10 aus Figur 3D. Im Unterschied zu Figur 8 ist der komplette Bereich 4 zwischen der äußeren Struktur 4.1 und der inneren Struktur 4.2 über eine Breite b von 1 mm entschichtet. Dieses Ausführungsbeispiel zeigt eine niedrige Transmissionsdämpfung. Da aber der entschichtete Bereich 4 mit einer Breite b von 1 mm sehr breit ist, ist die Entschichtung optisch sehr auffällig und verschlechtert die Durchsicht durch die Scheibe 10. Gleichzeitig wird die infrarotreflektierende Wirkung erniedrigt und der Bearbeitungsaufwand der Laserstrukturierung deutlich erhöht.

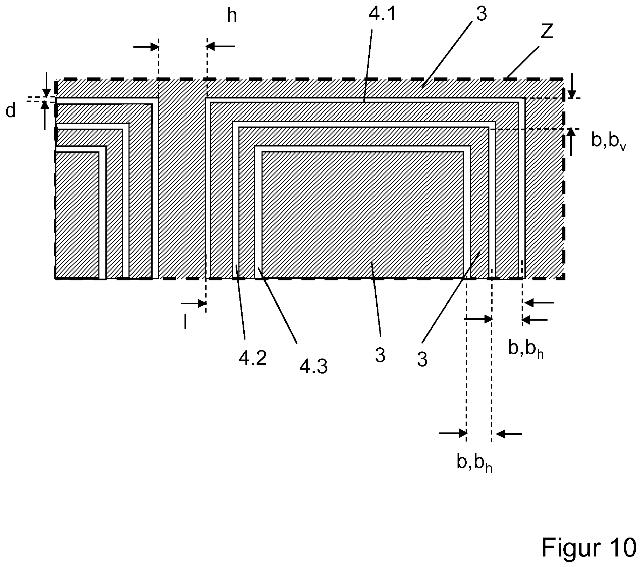

Figur 10 zeigt eine vergrößerte Darstellung des Ausschnitts Z eines alternativen Ausführungsbeispiels einer erfindungsgemäßen Scheibe 10 aus Figur 3D. Im Unterschied zu Figur 3D ist im inneren der inneren entschichteten Struktur 4.2 eine weitere entschichtete Struktur 4.3 angeordnet. Beispielsweise und ohne die Erfindung darauf einzuschränken, ist der Abstand b der inneren entschichteten Struktur von der weiteren entschichteten Struktur 4.3 gleich dem Abstand b der äußeren entschichteten Struktur 4.1 von der inneren entschichteten Struktur 4.2.

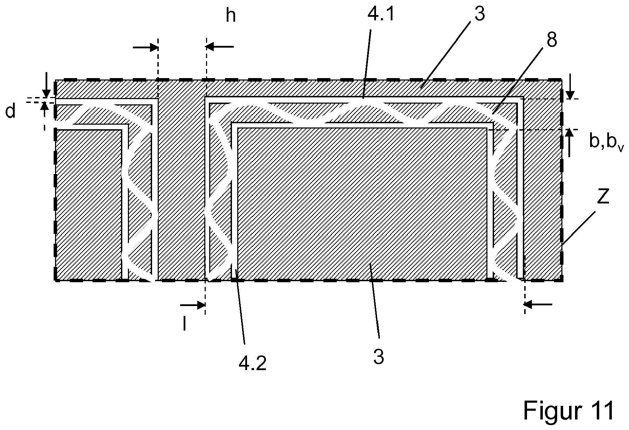

Figur 11 zeigt eine vergrößerte Darstellung des Ausschnitts Z eines alternativen Ausführungsbeispiels einer erfindungsgemäßen Scheibe 10 aus Figur 3D. Im Unterschied zu Figur 3D sind die äußere Struktur 4.1 und die innere Struktur 4.2 durch eine geschwungene und beispielsweise insbesondere eine sinusförmige entschichtete Linie verbunden. Eine derartige Scheibe 10 hat ähnlich gute Transmissionseigenschaften wie die Scheibe 10 aus Figur 8. Darüber hinaus weist sie Vorteile bei der Entschichtung durch Laserbearbeitung auf. Durch die geschwungene Linienführung muss die Spiegelmechanik zur Laserstrahllenkung weniger große Änderungen pro Zeitintervall durchführen als bei der Strukturierung der orthogonal verlaufenden, entschichteten Strukturen 8 aus Figur 8. Die auf die Spiegelmechanik einwirkenden Kräfte sind geringer und die Laserpositionierung kann schneller durchgeführt werden. Dadurch wird die Strukturierungszeit deutlich verringert.

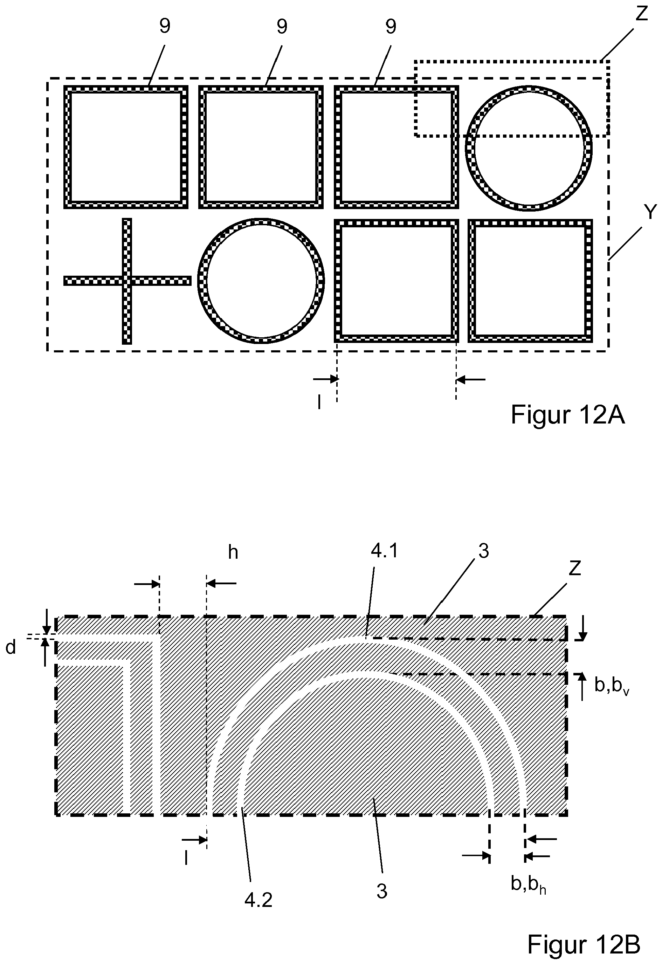

Figur 12A zeigt eine vergrößerte Darstellung des Ausschnitts Y eines alternativen Ausführungsbeispiels einer erfindungsgemäßen Scheibe 10 aus Figur 3A und Figur 12B eine vergrößerte Darstellung des Ausschnitts Z der erfindungsgemäßen Scheibe 10 aus Figur 12A. In diesem Ausführungsbeispiel weisen die Bereiche 9 unterschiedliche Formen auf und beispielsweise die Form eines Kreises, eines Quadrats und eines Kreuzes. Dies hat den besonderen Vorteil, dass die Durchlässigkeit für verschiedene Frequenzen und Polarisationen für hochfrequente elektromagnetische Strahlung optimiert und erhöht werden kann. Eine erfindungsgemäße Scheibe 10 kann dazu beispielsweise eine Vielzahl von Bereichen 9 mit entschichteten Strukturen unterschiedlicher Formen und Abmessungen aufweisen.

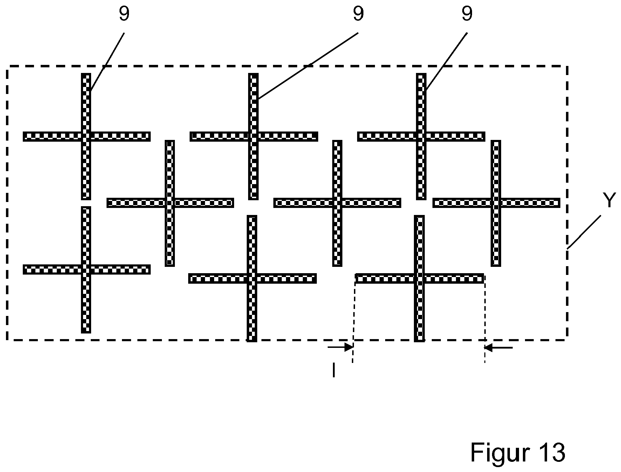

Figur 13 zeigt eine vergrößerte Darstellung des Ausschnitts Y eines alternativen Ausführungsbeispiels einer erfindungsgemäßen Scheibe 10 aus Figur 3A. Die transparente, elektrisch leitfähige Beschichtung 3 weist dabei mehrere Bereiche 9 mit kreuzförmigen entschichteten Strukturen 4.1,4.2 auf.

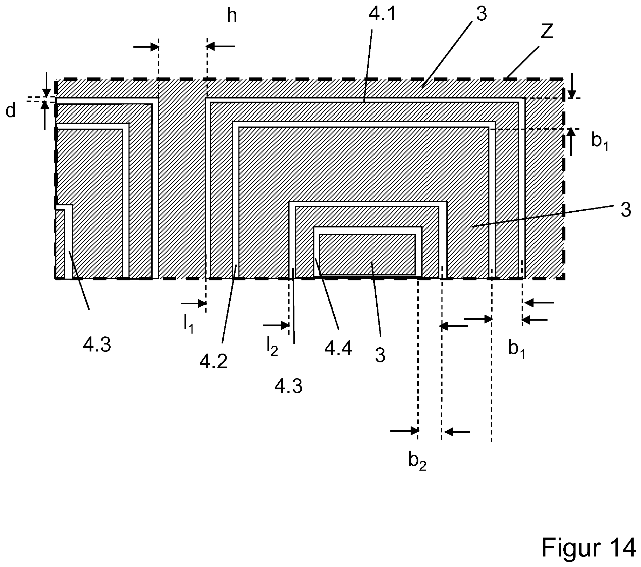

Figur 14 zeigt eine vergrößerte Darstellung des Ausschnitts Z eines alternativen Ausführungsbeispiels einer erfindungsgemäßen Scheibe 10 aus Figur 3A. Innerhalb der inneren entschichteten Struktur 4.2 ist eine weitere äußere entschichtete Struktur 4.3 und innerhalb der weiteren äußeren entschichteten Struktur 4.3 ist eine weitere innere entschichtete Struktur 4.4 angeordnet. Die weiteren entschichteten Strukturen 4.3,4.4 haben beispielsweise ebenfalls eine quadratische Form und sind untereinander und in Bezug auf die entschichteten Strukturen 4.1,4.2 konzentrisch angeordnet. Es versteht sich, dass die weiteren entschichteten Strukturen 4.3,4.4 auch andere Formen aufweisen können oder deren Zentrum versetzt angeordnet sein kann. Der Abstand $b_1$ zwischen der äußeren entschichteten Struktur 4.1 und der inneren entschichteten Struktur 4.2 beträgt beispielsweise 1 mm. Der Abstand $b_2$ zwischen der äußeren entschichteten Struktur 4.3 und der inneren entschichteten Struktur 4.4 beträgt ebenfalls beispielsweise 1 mm. Es versteht sich, dass die Abstände $b_1$ und $b_2$ nicht gleich sein müssen. Die Länge $l_1$ der äußeren entschichteten Struktur 4.1 beträgt beispielsweise 36 mm und die Länge $l_2$ der weiteren entschichteten Struktur 4.3 beträgt beispielsweise 24 mm. Eine derartige erfindungsgemäße Scheibe 10 kann eine verbesserte Transmission für mehrere und in diesem Beispiel für zwei Frequenzbereiche aufweisen.

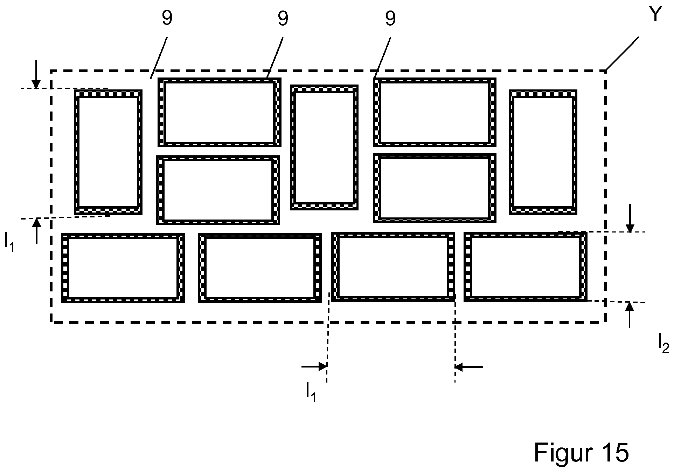

Figur 15 zeigt eine vergrößerte Darstellung des Ausschnitts Y eines alternativen Ausführungsbeispiels einer erfindungsgemäßen Scheibe 10 aus Figur 3A. Die transparente, elektrisch leitfähige Beschichtung 3 weist dabei mehrere Bereiche 9 mit rechteckförmigen entschichteten Strukturen 4.1,4.2 auf. Die rechteckförmige äußere entschichtete Struktur 4.1 hat dabei eine längere Seitenlänge $l_1$ von 36 mm und eine kürzere Seitenlänge $l_2$ von 24 mm. Dies ist besonders vorteilhaft, um die mögliche Wechselwirkung von verschiedenen Bereichen 9 in verschachtelten Ausführungen, wie in Figur 15 gezeigt wird, zu vermeiden und eine verbesserte mehrbandige Transmission zu erreichen.

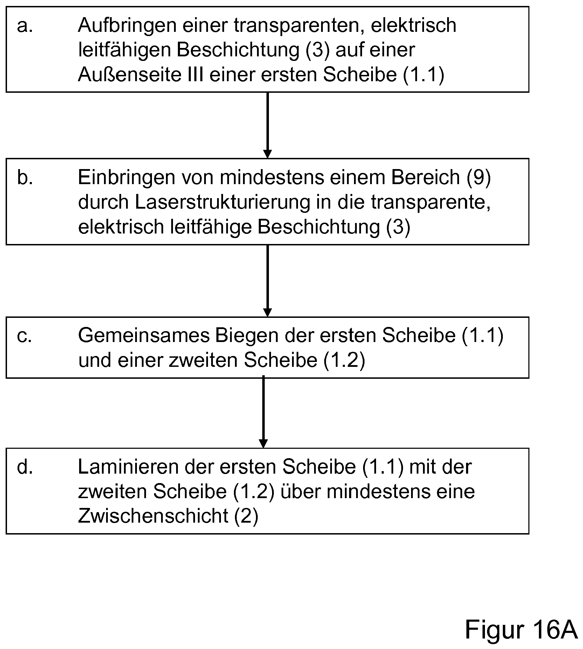

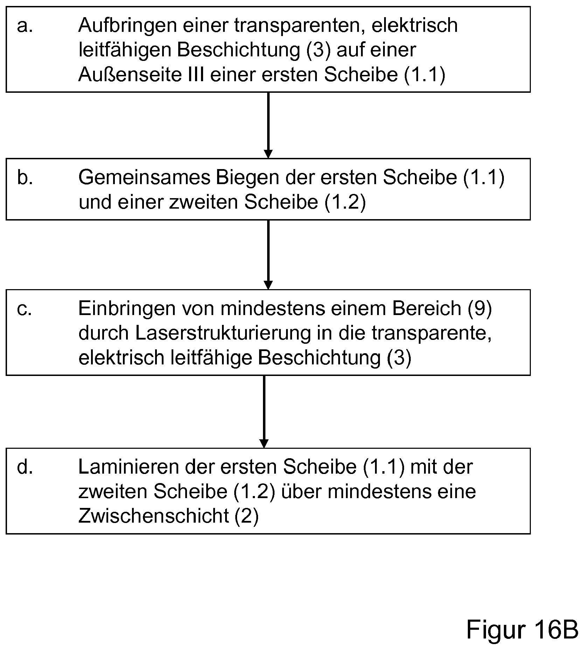

Figur 16A zeigt ein Flussdiagramm eines Ausführungsbeispiels des erfindungsgemäßen Verfahrens zur Herstellung einer erfindungsgemäßen Scheibe 10. Figur 16B zeigt ein Flussdiagramm einer weiteren Variante eines Ausführungsbeispiels des erfindungsgemäßen Verfahrens zur Herstellung einer erfindungsgemäßen Scheibe 10. Im Unterschied zu Figur 16A werden in Figur 16B die erste Scheibe 1.1 und die zweite Scheibe 1.2 zuerst gebogen und danach die äußeren entschichteten Strukturen 4.1 und die inneren entschichteten Strukturen 4.2 eingebracht.

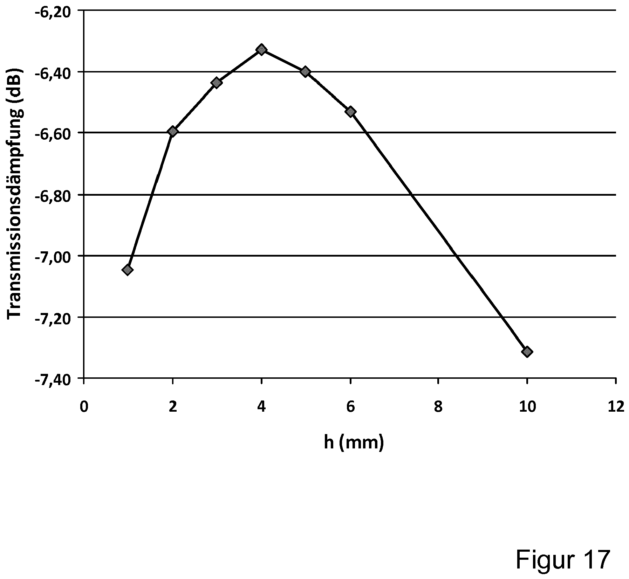

Die Figuren 17 bis 20 zeigen Simulationen der Transmissionsdämpfung für verschiedene Ausführungsbeispiele erfindungsgemäßer Scheiben 10. Bei den Simulationen wurde analog zum Ausführungsbeispiel in Figur 5 eine Einzelglasscheibe 1' mit einer transparenten elektrisch leitfähigen Beschichtung 3 auf der Innenseite IV der Einzelglasscheibe 1' angenommen. Die transparente, elektrisch leitfähige Beschichtung 3 hat einen Flächenwiderstand von 4 Ohm/Quadrat. Innerhalb der transparenten, elektrisch leitfähigen Beschichtung 3 sind Bereiche 9 mit entschichtete Strukturen 4.1,4.2 angeordnet. Zur Vereinfachung der Simulation wurde eine unendlich ausgedehnte Einzelglasscheibe 1' mit unendlich vielen Bereichen 9 angenommen.

Figur 17 zeigt ein Diagramm der Transmissionsdämpfung in Abhängigkeit des Abstand h von zwei benachbarten Bereichen 9. Die Bereiche 9 enthalten jeweils eine äußere entschichtete Struktur 4.1 und eine innere entschichtete Struktur 4.2 mit quadratischer Form, wie in Figur 3D dargestellt ist. Der Abstand b der äußeren entschichteten Struktur 4.1 von der inneren entschichteten Struktur 4.2 betrug 1,5 mm. Die Länge I der äußeren entschichteten Struktur 4.1 wurde an eine hochfrequente, elektromagnetische Strahlung mit einer Frequenz von 1,5 GHz (GPS) angepasst und betrug 24 mm. Die Linienbreite d der entschichteten Strukturen betrug 0,1 mm. Das Diagramm in Figur 17 zeigt die Transmissionsdämpfung in dB in Abhängigkeit des Abstands h zweier benachbarter Bereiche 9. Der Signalverlauf zeigt eine minimale Transmissionsdämpfung bei einem Abstand h von 4 mm. Die Transmissionsdämpfung beträgt hier lediglich etwa 6,3 dB im Vergleich zu einer Einzelglasscheibe 1' ohne transparente, elektrisch leitfähige Beschichtung 3. Für Abstände h von weniger als 2 mm und mehr als 6 mm nimmt die Transmissionsdämpfung stark zu. Für die hier verwendete Frequenz von 1,5 GHz, einen Abstand b von 1,5 mm und einer Linienbreite d von 0,1 mm ergibt sich ein bevorzugter Bereich mit hoher Transmission für Abstände h von 2 mm bis 6 mm.

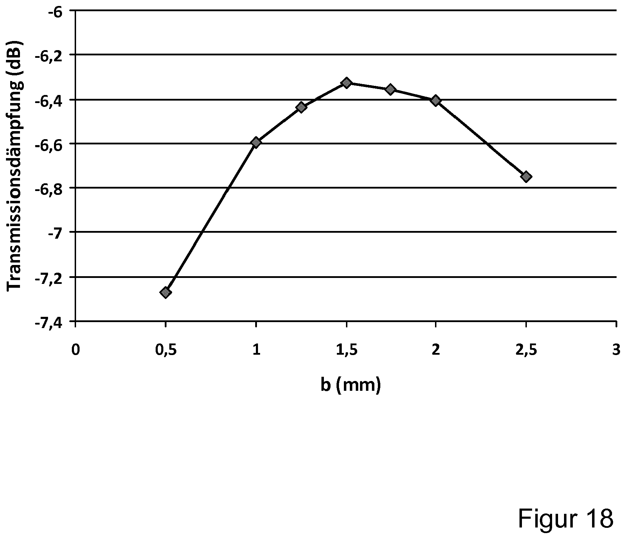

Figur 18 zeigt ein Diagramm der Transmissionsdämpfung in Abhängigkeit des Abstand b von äußerer entschichteter Struktur 4.1 und innerer entschichteter Struktur 4.2. Die weiteren Parameter entsprechen denen aus Figur 17. Der Abstand h benachbarter Bereiche 9 betrug 4 mm. Die Länge l der äußeren entschichteten Struktur 4.1 betrug 24 mm. Die Linienbreite d der entschichteten Strukturen betrug 0,1 mm. Das Diagramm in Figur 18 zeigt die Transmissionsdämpfung in dB in Abhängigkeit des Abstands b. Der Signalverlauf zeigt eine minimale Transmissionsdämpfung bei einem Abstand b von 1,5 mm. Die Transmissionsdämpfung beträgt hier lediglich etwa 6,3 dB im Vergleich zu einer Einzelglasscheibe 1' ohne transparente, elektrisch leitfähige Beschichtung 3. Für Abstände b von weniger als 1 mm und mehr als 2 mm nimmt die Transmissionsdämpfung stark zu. Für die hier verwendete Frequenz von 1,5 GHz, einen Abstand h von 4 mm und einer Linienbreite d von 0,1 mm ergibt sich ein bevorzugter Bereich mit hoher Transmission für Abstände b von 1 mm bis 2,25 mm.

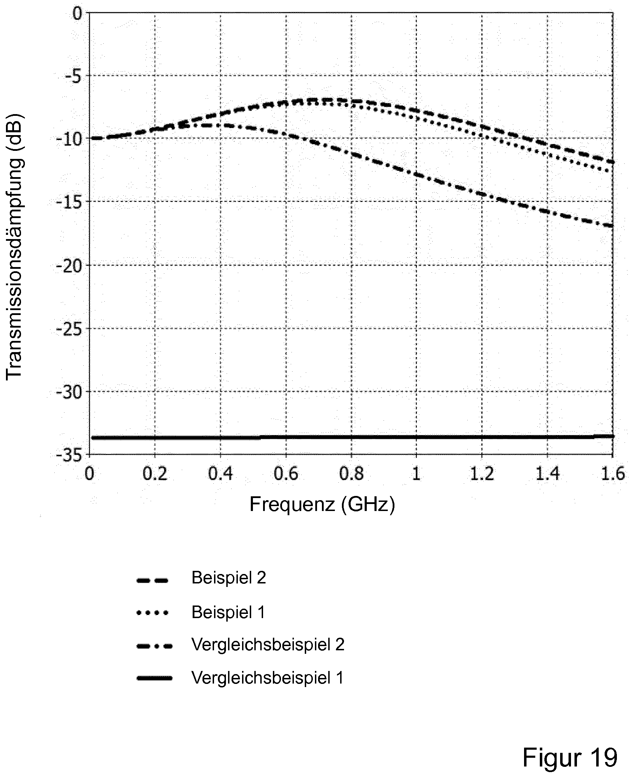

Figur 19 zeigt ein Diagramm der Transmissionsdämpfung für verschiedene Ausführungsbeispiele erfindungsgemäßer Bereiche 9 mit entschichteten Strukturen 4.1,4.2 in Abhängigkeit von der Frequenz. Der Abstand h benachbarter Bereiche 9 betrug 2 mm, der Abstand b von äußerer entschichteter Struktur 4.1 zu innerer entschichteter Struktur 4.2 betrug 1 mm und die Linienbreite d der entschichteten Strukturen 4.1,4.2 betrug 0,1 mm. Die weiteren Parameter der Einzelglasscheibe 1' und der Flächenwiderstand der transparenten, elektrisch leitfähigen Beschichtung 3 entsprechen denen aus Figur 17.

Als Beispiel 1 ist die Transmissionsdämpfung für einen Bereich 9 gemäß dem Ausführungsbeispiel aus Figur 3D aufgetragen. Die Länge l der äußeren entschichteten Struktur 4.1 ist auf das Mobilfunkband GSM 900 abgestimmt und beträgt 42 mm. Die Transmissionsdämpfung für hochfrequente, elektromagnetische Strahlung von 900 MHz beträgt etwa 7,8 dB. Ein Mobilfunkempfang hinter der Scheibe ist möglich. Aufgrund der geringen Linienbreite d von 0,1 mm sind die Bereiche 9 mit den entschichteten Strukturen 4.1,4.2 kaum sichtbar und behindern die Durchsicht durch die Scheibe nicht.

Als Beispiel 2 ist die Transmissionsdämpfung für einen Bereich 9 gemäß dem Ausführungsbeispiel aus Figur 8 aufgetragen. Die äußere entschichtete Struktur 4.1 und die innere entschichtete Struktur 4.2 sind auf jeder Seite der quadratischen Form durch 41 entschichtete Linien 8 verbunden. Der Abstand zwischen zwei entschichteten Linien 8 entlang einer Seite der entschichteten Strukturen 4.1,4.2 beträgt etwa 1 mm und damit etwa 1/333-tel der Wellenlänge λ der hochfrequente, elektromagnetische Strahlung mit einer Frequenz von 900 MHz. Die entschichteten Linien 8 verlaufen orthogonal zu den entschichteten Strukturen 4.1,4.2. Jede entschichtete Linie 8 hat in der angegebenen Simulation eine Linienbreite von 0,1 mm. Die Transmissionsdämpfung für hochfrequente, elektromagnetische Strahlung von 900 MHz beträgt etwa 7,3 dB. Das heißt die Transmission für hochfrequente, elektromagnetische Strahlung ist im Vergleich zur Scheibe 10 aus Beispiel 1 verbessert. Ein Mobilfunkempfang hinter der Scheibe ist möglich und im Vergleich zu Beispiel 1 verbessert. Aufgrund der geringen Linienbreite der entschichteten Linien 8 von 0,1 mm sind die Bereiche 9 kaum sichtbar und behindern die Durchsicht durch die Scheibe nicht.

In Figur 19 ist als Vergleichsbeispiel 1 die Transmissionsdämpfung für eine Einzelglasscheibe 1' mit transparenter, elektrisch leitfähiger Beschichtung 3 ohne Bereiche 9 mit entschichtete Strukturen 4.1,4.2 zu sehen. Die Transmissionsdämpfung ist mit etwa 34 dB sehr hoch, so dass beispielsweise kein Mobilfunkempfang hinter dieser Scheibe möglich ist.

Als Vergleichsbeispiel 2 nach dem Stand der Technik ist die Transmissionsdämpfung für eine Einzelglasscheibe 1' mit transparenter, elektrisch leitfähiger Beschichtung 3 aufgetragen, die lediglich eine quadratische entschichtete Struktur 4 mit einer Linienbreite d von 0,1 mm aufweist. Das heißt, die Scheibe 10 nach Vergleichsbeispiel 2 weist keine innere entschichtete Struktur 4.2 oder weitere Entschichtungen außerhalb oder innerhalb der entschichteten Struktur 4 auf. Die Transmissionsdämpfung beträgt bei einer Frequenz von 900 MHz etwa 12 dB. Ein Mobilfunkempfang ist hinter der Einzelglasscheibe 1' aus Vergleichsbeispiel 2 nicht oder nur sehr eingeschränkt möglich.

Die Transmissionsdämpfung des Beispiels 2 nach Figur 8 ist bei einer Frequenz von 900 MHz um 4.7 dB niedriger als beim Vergleichsbeispiel 2 nach dem Stand der Technik. Das bedeutet, dass die Transmissionsdämpfung um einen Faktor 3 reduziert werden konnte, ohne dass die Durchsicht durch die Scheibe 10 und deren optische Eigenschaften nennenswert verschlechtert wurden.

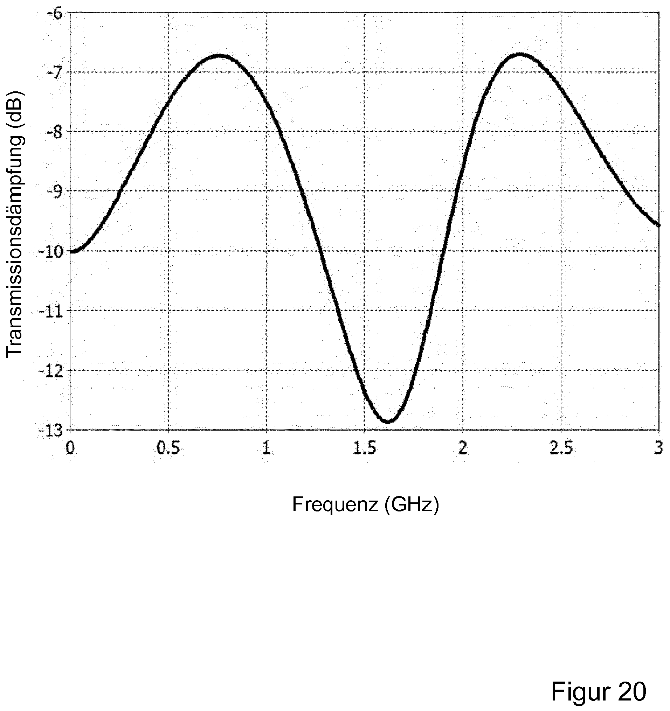

Figur 20 zeigt ein Diagramm der Transmissionsdämpfung für eine erfindungsgemäße Scheibe 10 nach Figur 5 mit Bereichen 9 nach Figur 14 mit mehrbandiger Transmission. Die Scheibe 10 weist dabei eine äußere entschichtete Struktur 4.1 mit einer inneren entschichteten Struktur 4.2 auf. Innerhalb der inneren entschichteten Struktur 4.2 ist eine weitere äußere entschichtete Struktur 4.3 und innerhalb der weiteren äußeren entschichteten Struktur 4.3 ist eine weitere innere entschichtete Struktur 4.4 angeordnet. Die entschichteten Strukturen 4.1-4.4 weisen eine quadratische Form auf und sind konzentrisch zueinander angeordnet. Der Abstand $b_1$ zwischen der äußeren entschichteten Struktur 4.1 und der inneren entschichteten Struktur 4.2 beträgt 1 mm. und der Abstand $b_2$ zwischen der äußeren entschichteten Struktur 4.3 und der inneren entschichteten Struktur 4.4 1 mm. Die Länge $l_1$ der äußeren entschichteten Struktur 4.1 beträgt 42 mm und die Länge $l_2$ der weiteren entschichteten Struktur 4.3 betrug 22 mm. Der Quotient aus $b_1/l_1$ beträgt hier beispielsweise 1mm/42mm und ist damit kleiner als 1/5. Der Abstand h benachbarter Bereiche 9 beträgt 2 mm. Der Signalverlauf zeigt zwei Minima in der Transmissionsdämpfung. Das erste Minimum hat eine Transmissionsdämpfung von 6,7 dB bei 0,76 GHz. Das zweite Minimum hat eine Transmissionsdämpfung von 6,7 dB bei 2,3 GHz. Eine derartige erfindungsgemäße Scheibe 10 hat somit eine verbesserte Transmission für mehrere und in diesem Beispiel für zwei Frequenzbereiche.

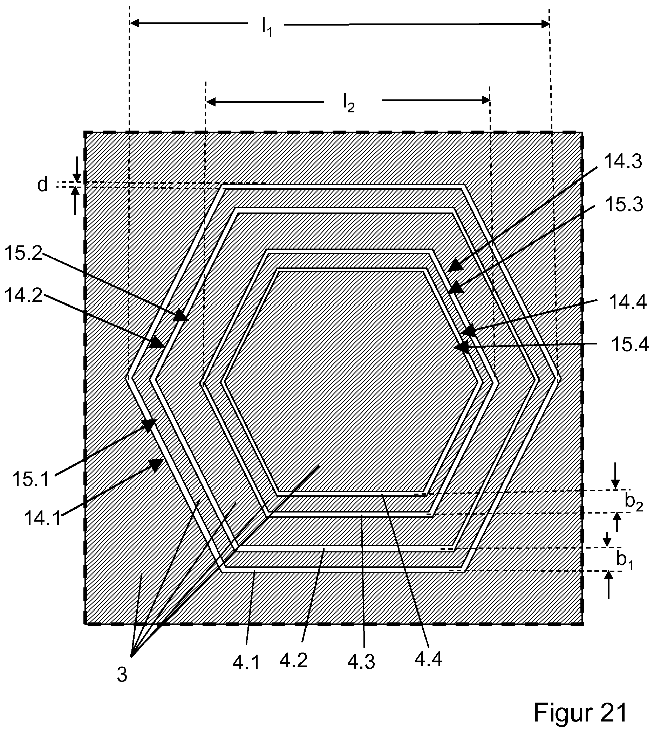

Figur 21 zeigt eine schematische Darstellung eines Ausschnitts einer erfindungsgemäßen Scheibe 10 in einer Draufsicht. Dargestellt sind eine hexagonale äußere entschichtete Struktur 4.1 und eine hexagonale innere entschichtete Struktur 4.2. sowie eine weitere hexagonale äußere entschichtete Struktur 4.3 und eine weitere hexagonale innere entschichtete Struktur 4.4. Die hexagonalen Strukturen 4.1-4.4 sind jeweils regelmäßige Hexagone mit gleich langen Seiten und konzentrisch zueinander angeordnet. Es versteht sich, dass deren Zentrum auch versetzt angeordnet sein kann. Der Abstand $b_1$ zwischen der äußeren entschichteten Struktur 4.1 und der inneren entschichteten Struktur 4.2 beträgt beispielsweise 1,5 mm. Der Abstand $b_2$ zwischen der weiteren äußeren entschichteten Struktur 4.3 und der weiteren inneren entschichteten Struktur 4.4 beträgt ebenfalls beispielsweise 1,5 mm. Es versteht sich, dass die Abstände $b_1$ und $b_2$ nicht gleich sein müssen. Die Länge $l_1$ der äußeren entschichteten Struktur 4.1 beträgt beispielsweise 39 mm und die Länge $l_2$ der weiteren äußeren entschichteten Struktur 4.3 beträgt beispielsweise 28 mm. Die Breite d der entschichteten Strukturen 4.1-4.4 ist ebenfalls beispielsweise konstant und beträgt 100 $\mu$m.

Die äußere entschichtete Struktur 4.1 ist im Bereich ihres außenliegenden Randes 14.1 und ihres innenliegenden Randes 15.1 vollständig von der transparenten elektrisch leitfähigen Beschichtung 3 umgeben. Außenliegender Rand 14.1 bedeutet hier der Bereich der außerhalb der äußeren entschichteten Struktur 4.1 liegt und an die äußere entschichtete Struktur 4.1 grenzt. Innenliegender Rand 15.1 bedeutet dementsprechend der Bereich der innerhalb der inneren entschichteten Struktur 4.1 liegt und an die innere entschichtete Struktur 4.1 grenzt. Die innere entschichtete Struktur 4.2 ist hier beispielsweise ebenfalls im Bereich ihres außenliegenden Randes 14.2 und ihres innenliegenden Randes 15.2 vollständig von der transparenten elektrisch leitfähigen Beschichtung 3 umgeben. Die weitere äußere entschichtete Struktur 4.3 und die weitere innere entschichtete Struktur 4.4 sind ebenso jeweils im Bereich ihres außenliegenden Randes 14.3, 14.4 und ihres innenliegenden Randes 15.3, 15.4 vollständig von der transparenten elektrisch leitfähigen Beschichtung 3 umgeben. Das bedeutet, dass die Zwischenräume zwischen der äußeren entschichteten Struktur 4.1 und der inneren entschichteten Struktur 4.2 sowie der weiteren äußeren entschichteten Struktur 4.3 und der weiteren inneren entschichteten Struktur 4.4 vollständig mit der transparenten elektrisch leitfähigen Beschichtung 3 gefüllt sind. Die erfindungsgemäße Scheibe 10 weist einen Abschnitt 11 mit einer Vielzahl der hier dargestellten Strukturen 4.1-4.4 auf, vergleiche zum Beispiel Figur 2.

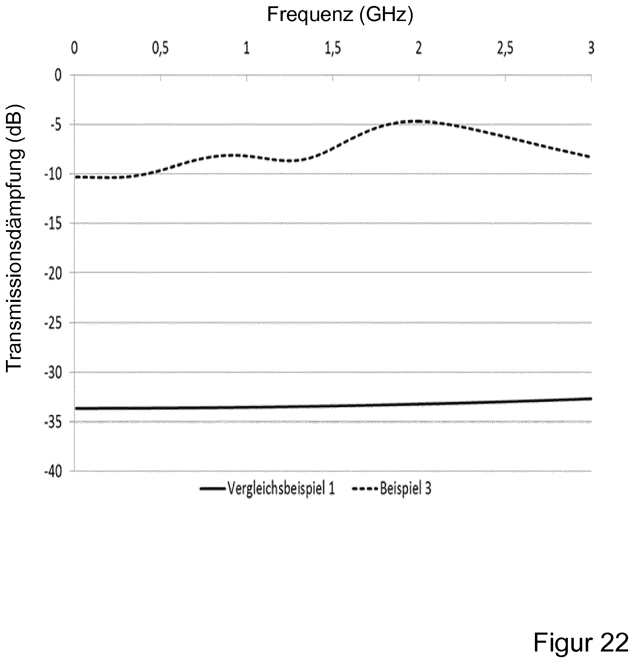

Figur 22 zeigt ein Diagramm der Transmissionsdämpfung für eine erfindungsgemäße Scheibe 10 nach Figur 21, die für das GSM-Band von 820 MHz bis 960 MHz sowie für das UMTS-Band von 1700 MHz bis 2200 MHz optimiert wurde. In Figur 22 ist als Vergleichsbeispiel 1 die Transmissionsdämpfung für eine Einzelglasscheibe 1' mit transparenter, elektrisch leitfähiger Beschichtung 3 ohne Bereiche 9 mit entschichteten Strukturen 4.1-4.4 zu sehen. Die Transmissionsdämpfung ist mit etwa 34 dB sehr hoch, so dass beispielsweise kein Mobilfunkempfang hinter dieser Scheibe möglich ist.

Die Transmissionsdämpfung des Beispiels 3 nach Figur 21 ist bei einer Frequenz von 900 MHz um 25 dB niedriger als beim Vergleichsbeispiel 1 nach dem Stand der Technik. Des Weiteren ist die Transmissionsdämpfung des Beispiels 3 nach Figur 21 bei einer Frequenz von 1,9 GHz um 28 dB niedriger als beim Vergleichsbeispiel 1 nach dem Stand der Technik. Das bedeutet, dass die Transmissionsdämpfung um einen Faktor 19 beziehungsweise um einen Faktor 27 reduziert werden konnte, ohne dass die Durchsicht durch die Scheibe 10 und deren optische Eigenschaften nennenswert verschlechtert wurden.

Dieses Ergebnis war für den Fachmann unerwartet und überraschend.

Bezugszeichenliste

| | |
|---|---|
| 1 | Verbundscheibe |
| 1' | Einzelscheibe |
| 1.1 | erste Scheibe, |
| 1.2 | zweite Scheibe |
| 2 | Zwischenschicht |
| 3 | transparente, elektrisch leitfähige Beschichtung |
| 4 | entschichteter Bereich |
| 4.1 | äußere entschichtete Struktur |
| 4.2 | innere entschichtete Struktur |
| 4.3 | weitere äußere entschichtete Struktur |
| 4.4 | weitere innere entschichtete Struktur |
| 5 | Randentschichtung |

| 6 | Trägerfolie |
|---|---|
| 7 | A-Sichtfeld |
| 8 | entschichtete Linie |
| 9 | Bereich |
| 10 | Scheibe |
| 11 | Abschnitt |
| 12 | Scheibe nach dem Stand der Technik |
| 13 | Anordnung |
| 14.1,14.2,14.3,14.4 | außenliegender Rand |
| 15.1,15.2,15.3,15.4 | innenliegender Rand |

| $\alpha$ | Winkel |
|---|---|
| A-A' | Schnittlinie |
| $b, b_h, b_v, b_1$ | Abstand zwischen äußerer entschichteter Struktur 4.1 und innerer entschichteter Struktur 4.2 |
| $b_2$ | Abstand zwischen einer weiteren äußeren entschichteten Struktur 4.3 und einer weiteren inneren entschichteter Struktur 4.4 |
| d | Linienbreite einer entschichteten Struktur 4.1,4.2,4.3,4.4 |
| $\varepsilon_{eff}$ | effektive relative Permittivitätszahl |
| h | Abstand benachbarter Bereiche 9 |
| $l, l_1, l_2$ | Länge oder Breite einer entschichteten Struktur 4.1,4.2,4.3 |
| $\lambda$ | Wellenlänge |
| Y | Ausschnitt |
| Z | Ausschnitt |

| I | Außenseite der zweiten Scheibe 1.2 |
|---|---|
| II | Innenseite der zweiten Scheibe 1.2 |
| III | Außenseite der ersten Scheibe 1.1 |
| IV | Innenseite der ersten Scheibe 1.1 |
| V | Seite der Zwischenschicht 2 |
| VI | Seite der Zwischenschicht 2 |

**Patentansprüche**

1. Scheibe (10), umfassend:

   - mindestens eine erste Scheibe (1.1) mit einer Außenseite (III) und einer Innenseite (IV),
   - mindestens eine transparente, elektrisch leitfähige Beschichtung (3), die auf der Außenseite (III) und/oder der Innenseite (IV) der ersten Scheibe (1.1) angeordnet ist und
   - mindestens einen Bereich (9) mit mindestens einer äußeren entschichteten Struktur (4.1) und einer inneren entschichteten Struktur (4.2),

   wobei zwischen der äußeren entschichteten Struktur (4.1) und der inneren entschichteten Struktur (4.2) und innerhalb der inneren entschichteten Struktur (4.2) die transparente, elektrisch leitfähige Beschichtung (3) vorliegt und die äußere entschichtete Struktur (4.1) vollständig von der transparenten elektrisch leitfähigen Beschichtung (3) umrandet ist.

2. Scheibe (10) nach Anspruch 1, wobei die innere entschichtete Struktur (4.2) an ihrem innenliegenden Rand (15.2) vollständig von der transparenten elektrisch leitfähigen Beschichtung (3) umrandet ist.

3. Scheibe (10) nach Anspruch 1 oder Anspruch 2, wobei die äußere entschichtete Struktur (4.1) und die innere entschichtete Struktur (4.2) die Form eines Quadrats, eines Rechtecks, einer Raute, eines Trapezes, eines Hexagons, eines Oktagons, eines Kreuzes, eines Ovals oder eines Kreises aufweisen und/oder konzentrisch zueinander angeordnet sind.

4. Scheibe (10) nach einem der Ansprüche 1 bis 3, wobei ein Abstand b der äußeren entschichteten Struktur (4.1) von der inneren entschichteten Struktur (4.2) von 0,5 mm bis 30 mm und bevorzugt von 1 mm bis 5 mm beträgt und besonders bevorzugt konstant ist.

**5.** Scheibe (10) nach einem der Ansprüche 1 bis 4, wobei der Bereich zwischen der äußeren entschichteten Struktur (4.1) und der inneren entschichteten Struktur (4.2) vollständig mit der transparenten, elektrisch leitfähigen Beschichtung (8) gefüllt ist oder die äußere entschichtete Struktur (4.1) und die innere entschichtete Struktur (4.2) durch mindestens eine entschichtete Linie (8) und bevorzugt durch eine orthogonal angeordnete entschichtete Linie (8) miteinander verbunden sind.

**6.** Scheibe (10) nach einem der Ansprüche 1 bis 5, wobei eine Linienbreite d der entschichteten Struktur (4.1, 4.2) und/oder der entschichteten Linie (8) von 25 $\mu$m bis 300 $\mu$m und bevorzugt 30 $\mu$m bis 140 $\mu$m beträgt.

**7.** Scheibe (10) nach einem der Ansprüche 1 bis 6, wobei ein minimaler Abstand h zwischen benachbarten Bereichen (9) von 1 mm bis 100 mm und bevorzugt von 1 mm bis 20 mm beträgt.

**8.** Scheibe (10) nach einem der Ansprüche 1 bis 7, wobei die transparente, elektrisch leitfähige Beschichtung (3) mindestens vier Bereiche (9), bevorzugt 10 bis 50 Bereiche (9) aufweist und die Bereiche (9) bevorzugt horizontal und/oder vertikal angeordnet sind und/oder die Fläche der Bereiche (9) einen Flächenanteil von 7 % bis 25 % der Scheibe (10) aufweist.

**9.** Scheibe (10) nach einem der Ansprüche 1 bis 8, wobei die erste Scheibe (1.1) und/oder die zweite Scheibe (1.2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält und/oder eine effektive relative Permittivitätszahl $\varepsilon_{eff}$ von 2 bis 8 und bevorzugt von 6 bis 8 aufweist.

**10.** Scheibe (10) nach einem der Ansprüche 1 bis 9, wobei die Länge I der entschichteten Struktur (4.1, 4.2) von 10 mm bis 150 mm, und/oder von $\lambda/(7*\sqrt{\varepsilon_{eff}})$ bis $(3*\lambda)/(2*\sqrt{\varepsilon_{eff}})$ beträgt und/oder das Verhältnis aus Abstand b zur Länge I kleiner oder gleich 1/5 ist.

**11.** Scheibe (10) nach einem der Ansprüche 1 bis 10, wobei die transparente, elektrisch leitfähige Beschichtung (3) mindestens ein Metall enthält, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, $SnO_2$:F), Antimon-dotiertes Zinnoxid (ATO, $SnO_2$:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon und/oder die transparente, elektrisch leitfähige Beschichtung (3) einen Flächenwiderstand von 0,35 Ohm/Quadrat bis 200 Ohm/Quadrat, bevorzugt 0,6 Ohm/Quadrat bis 30 Ohm/Quadrat aufweist.

**12.** Verbundscheibe (1) mindestens umfassend:

- eine Scheibe (10) nach einem der Ansprüche 1 bis 11 und
- eine zweite Scheibe (1.2), die über mindestens eine Zwischenschicht (2) mit der Scheibe (10) flächig verbunden ist.

**13.** Verfahren zur Herstellung einer Scheibe (10), wobei mindestens:

a. die transparente, elektrisch leitfähige Beschichtung (3) auf der Außenseite (III) und/oder der Innenseite (IV) einer ersten Scheibe (1.1) aufgebracht wird und
b. mindestens ein Bereich (9) mit mindestens einer äußeren entschichteten Struktur (4.1) und einer inneren entschichteten Struktur (4.2) in die transparente, elektrisch leitfähige Beschichtung (3) eingebracht wird, wobei zwischen der äußeren entschichteten Struktur (4.1) und der inneren entschichteten Struktur (4.2) und innerhalb der inneren entschichteten Struktur (4.2) die transparente, elektrisch leitfähige Beschichtung (3) vorliegt.

**14.** Verfahren zur Herstellung einer Scheibe (10) nach Anspruch 13, wobei die entschichtete Struktur (4.1, 4.2) durch Laserstrukturierung in die transparente, elektrisch leitfähige Beschichtung (3) eingebracht wird.

**15.** Verfahren zur Herstellung einer Scheibe (10) nach einem der Ansprüche 13 oder 14, wobei im Schritt (a) die transparente, elektrisch leitfähige Beschichtung (3) auf eine Trägerschicht (6) aufgebracht wird und die Trägerschicht (6), bevorzugt über eine Zwischenschicht (2), mit der ersten Scheibe (1.1) flächig verbunden wird.

16. Verwendung einer Scheibe (10) nach einem der Ansprüche 1 bis 11 oder einer Verbundscheibe (1) nach Anspruch 12 als Verglasung mit niedriger Transmissionsdämpfung für hochfrequente elektromagnetische Strahlung, in einer Fahrzeugkarosserie oder einer Fahrzeugtür eines Fortbewegungsmittels zu Lande, zu Wasser oder in der Luft, bevorzugt als Windschutzscheibe, in Gebäuden als Teil einer Außenfassade oder eines Gebäudefensters und/oder als Einbauteil in Möbeln und Geräten.

Figur 1

Stand der Technik

Figur 2

Figur 3A

Figur 3B

Figur 3C

Figur 3D

Figur 4

Figur 5

Figur 6

Figur 7

Figur 8

Figur 9

Figur 10

Figur 11

Figur 12A

Figur 12B

Figur 13

Figur 14

Figur 15

a. Aufbringen einer transparenten, elektrisch leitfähigen Beschichtung (3) auf einer Außenseite III einer ersten Scheibe (1.1)

↓

b. Einbringen von mindestens einem Bereich (9) durch Laserstrukturierung in die transparente, elektrisch leitfähige Beschichtung (3)

↓

c. Gemeinsames Biegen der ersten Scheibe (1.1) und einer zweiten Scheibe (1.2)

↓

d. Laminieren der ersten Scheibe (1.1) mit der zweiten Scheibe (1.2) über mindestens eine Zwischenschicht (2)

Figur 16A

| a. | Aufbringen einer transparenten, elektrisch leitfähigen Beschichtung (3) auf einer Außenseite III einer ersten Scheibe (1.1) |

| b. | Gemeinsames Biegen der ersten Scheibe (1.1) und einer zweiten Scheibe (1.2) |

| c. | Einbringen von mindestens einem Bereich (9) durch Laserstrukturierung in die transparente, elektrisch leitfähige Beschichtung (3) |

| d. | Laminieren der ersten Scheibe (1.1) mit der zweiten Scheibe (1.2) über mindestens eine Zwischenschicht (2) |

Figur 16B

Figur 17

Figur 18

Figur 19

Figur 20

Figur 21

Figur 22

# EP 3 575 079 A1

Europäisches Patentamt
European Patent Office
Office européen des brevets

## EUROPÄISCHER RECHERCHENBERICHT

Nummer der Anmeldung

EP 19 18 3980

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2003/080909 A1 (VOELTZEL CHARLES S [US]) 1. Mai 2003 (2003-05-01) * Ansprüche 16-38 * * Abbildungen 2,5 * * Absätze [0003], [0007], [0030], [0031], [0043] * | 1-3,5,8, 9,11-16 | INV. B32B17/10 |
| X | DE 198 17 712 C1 (SEKURIT SAINT GOBAIN DEUTSCH [DE]) 3. Februar 2000 (2000-02-03) * Abbildungen 1,2 * * Ansprüche * * Seite 2, Zeilen 18-30 * * Seite 2, Zeile 67 - Seite 3, Zeile 2 * * Seite 3, Zeilen 30,31 * | 1-6,9-16 | |
| A | WO 2012/066324 A1 (PILKINGTON GROUP LTD [GB]; PAULUS PETER [DE]) 24. Mai 2012 (2012-05-24) * Anspruch 1 * | 1-16 | |
| A | DE 103 14 094 A1 (PILKINGTON AUTOMOTIVE D GMBH [DE]) 25. März 2004 (2004-03-25) * Anspruch 1 * | 1-16 | RECHERCHIERTE SACHGEBIETE (IPC) B32B C03C |
| A | DE 195 08 042 A1 (NIPPON SHEET GLASS CO LTD [JP]) 26. Oktober 1995 (1995-10-26) * Seite 2, Zeilen 44-46 * | 1-16 | |

Der vorliegende Recherchenbericht wurde für alle Patentansprüche erstellt

| Recherchenort | Abschlußdatum der Recherche | Prüfer |
|---|---|---|
| München | 24. Oktober 2019 | Somerville, Fiona |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 18 3980

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-10-2019

| Im Recherchenbericht angeführtes Patentdokument | Datum der Veröffentlichung | Mitglied(er) der Patentfamilie | Datum der Veröffentlichung |
|---|---|---|---|
| US 2003080909 A1 | 01-05-2003 | AT 398343 T | 15-07-2008 |
| | | CA 2461028 A1 | 01-05-2003 |
| | | CN 1561559 A | 05-01-2005 |
| | | EP 1442497 A1 | 04-08-2004 |
| | | ES 2307791 T3 | 01-12-2008 |
| | | JP 4176019 B2 | 05-11-2008 |
| | | JP 2005506904 A | 10-03-2005 |
| | | KR 20040047965 A | 05-06-2004 |
| | | MX PA04003805 A | 30-07-2004 |
| | | US 2003080909 A1 | 01-05-2003 |
| | | WO 03036758 A1 | 01-05-2003 |
| DE 19817712 C1 | 03-02-2000 | DE 19817712 C1 | 03-02-2000 |
| | | EP 0990278 A1 | 05-04-2000 |
| | | ES 2366664 T3 | 24-10-2011 |
| | | JP 4423384 B2 | 03-03-2010 |
| | | JP 2002506596 A | 26-02-2002 |
| | | KR 20010013734 A | 26-02-2001 |
| | | US 6356236 B1 | 12-03-2002 |
| | | WO 9954961 A1 | 28-10-1999 |
| WO 2012066324 A1 | 24-05-2012 | EP 2640549 A1 | 25-09-2013 |
| | | US 2013295300 A1 | 07-11-2013 |
| | | WO 2012066324 A1 | 24-05-2012 |
| DE 10314094 A1 | 25-03-2004 | AT 517450 T | 15-08-2011 |
| | | DE 10314094 A1 | 25-03-2004 |
| DE 19508042 A1 | 26-10-1995 | DE 19508042 A1 | 26-10-1995 |
| | | JP H07242441 A | 19-09-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 378917 A
- WO 2010043598 A1
- EP 1605729 A2
- EP 0717459 A1
- US 20030080909 A1
- DE 19817712 C1
- EP 0847965 B1
- EP 2200097 A1
- EP 2139049 A1